# EUROPEAN PATENT APPLICATION

(11) **EP 3 820 087 A1**
(43) Date of publication of application: **12.05.2021**
(21) Application number: 19858232.2
(22) Date of filing: 04.07.2019
(51) Int. Cl.: H04L 12/703, H04L 12/751

(54) **MESSAGE SENDING METHOD, NETWORK DEVICE AND COMPUTER STORAGE MEDIUM**

(30) Priority: 06.09.2018 CN 201811038578; 29.04.2019 CN 201910357506
(71) Applicant: Huawei Technologies Co., Ltd., Longgang District Shenzhen, Guangdong 518129 (CN)
(72) Inventor: DU, Tao, Shenzhen, Guangdong 518129 (CN); GONG, Yunfei, Shenzhen, Guangdong 518129 (CN); LI, Zhenbin, Shenzhen, Guangdong 518129 (CN); ZHANG, Jiaqing, Shenzhen, Guangdong 518129 (CN); LI, Xingnuo, Shenzhen, Guangdong 518129 (CN); GU, Yunan, Shenzhen, Guangdong 518129 (CN); LU, Gongyu, Shenzhen, Guangdong 518129 (CN)
(74) Representative: Kreuz, Georg Maria
(86) International application number: PCT/CN2019/094750
(87) International publication number: WO 2020/048214

(57) **Abstract**

This application discloses a first packet sending method, a network device, and a computer storage medium, and pertains to the field of communications technologies. The method includes: generating, by a network device, a first packet, where the first packet includes a field used to indicate a first protocol, the first packet further includes a field carrying data of the first protocol, and a protocol followed by the first packet is different from the first protocol; and sending, by the network device, the first packet to a peer network device. Because the protocol followed by the first packet is different from the first protocol, regardless of which protocol the first protocol is specifically, the data of the first protocol may be exchanged by using the first packet. In other words, this application provides a general protocol, to transmit the data of the first protocol. This improves packet sending flexibility.

## Description

This application claims priority to Chinese Patent Application No. 201811038578.0, filed with the China National Intellectual Property Administration on September 06, 2018 and entitled "ROUTE FLAPPING SOURCE QUERY METHOD, ROUTING DEVICE, AND STORAGE MEDIUM", and Chinese Patent Application No. 201910357506.0, filed with the Chinese Patent Office on April 29, 2019 and entitled "PACKET SENDING METHOD, NETWORK DEVICE, AND COMPUTER STORAGE MEDIUM", which are incorporated herein by reference in their entireties.

### TECHNICAL FIELD

This application relates to the field of communications technologies, and in particular, to a packet sending method, a network device, and a computer storage medium.

### BACKGROUND

With development of protocols, after running a first protocol, a network device in a network may need to exchange a packet with another network device, to transmit data such as diagnostic data, so that the network implements a new function based on these data. For example, to implement a route flapping source tracing function, a network device using a border gateway protocol (border gateway protocol, BGP) may transmit information about a flapping source to a diagnosis initiating device by using a packet, and the diagnosis initiating device performs fault diagnosis based on the information about the flapping source. Currently, the first protocol run by the network device does not support transmission of these data. Therefore, a packet sending method urgently needs to be researched to transmit these data.

### SUMMARY

This application provides a packet sending method, to improve packet sending flexibility. The technical solutions are as follows.

According to a first aspect, a packet sending method is provided. The method includes: generating, by a network device, a first packet, where the first packet includes a field used to indicate a first protocol, the first packet further includes a field carrying data of the first protocol, and a protocol followed by the first packet is different from the first protocol; and sending, by the network device, the first packet to a peer network device.

In this application, the network device may transmit the data of the first protocol to the peer network device by using the first packet. Because the protocol followed by the first packet is different from the first protocol, regardless of which protocol the first protocol is specifically, the data of the first protocol may be exchanged by using the first packet. In other words, this application provides a general protocol, to transmit the data of the first protocol. This improves packet sending flexibility.

Optionally, before the generating, by a network device, a first packet, the method further includes: receiving, by the network device, a second packet from the peer network device, where the second packet includes a field used to indicate the first protocol, the second packet is used to indicate the network device to feed back the data of the first protocol to the peer network device, and a protocol followed by the second packet is the same as the protocol followed by the first packet; and the generating, by a network device, a first packet includes: generating, by the network device, the first packet in response to the second packet.

In this application, the network device may actively send the first packet to the peer network device, to transmit the data of the first protocol. For example, the first packet may be an advertisement packet. Certainly, the network device may further send the first packet based on a request (for example, the second packet) of the peer network device. For example, the first packet may be a reply packet. This further improves first packet sending flexibility.

Optionally, before the generating, by a network device, a first packet, the method further includes: sending, by the network device, a third packet to the peer network device, where the third packet includes a field used to indicate the first protocol, the third packet is used to indicate that the network device supports exchange of the data of the first protocol, and a protocol followed by the third packet is the same as the protocol followed by the first packet. In a process of negotiating with the peer network device, the network device may notify, in the foregoing manner, the peer network device that the network device supports exchange of the data of the first protocol.

Optionally, before the generating, by a network device, a first packet, the method further includes: receiving, by the network device, a fourth packet from the peer network device, where the fourth packet includes a field used to indicate the first protocol, and a protocol followed by the fourth packet is the same as the protocol followed by the first packet; and determining, by the network device based on the fourth packet, that the peer network device supports exchange of the data of the first protocol.

In this application, before the network device exchanges the data of the first protocol with the peer network device, the network device may negotiate with the peer network device to determine whether the peer network device supports exchange of the data of the first protocol. In this manner, the network device can be prevented from sending, to the peer network device, data that is not supported by the peer network device. This reduces power consumption of the network device.

Optionally, before the generating, by a network device, a first packet, the method further includes: enabling, by the network device, a capability of exchanging the data of the first protocol; and sending, by the network device, a fifth packet to the peer network device, where the fifth packet includes a field used to indicate the first protocol, the fifth packet further carries a field used to indicate the network device to enable the capability of exchanging the data of the first protocol, and a protocol followed by the fifth packet is the same as the protocol followed by the first packet.

Further, before the network device exchanges the data of the first protocol with the peer network device, the network device may enable the capability of exchanging the data of the first protocol, and notify, by using the fifth packet, the peer network device that the network device has enabled the capability of exchanging the data of the first protocol.

Optionally, before the generating, by a network device, a first packet, the method further includes: receiving, by the network device, a ninth packet sent by the peer network device, where the ninth packet includes a field used to indicate the first protocol, the ninth packet further carries a field used to indicate the peer network device to enable the capability of exchanging the data of the first protocol, and a protocol followed by the ninth packet is the same as the protocol followed by the first packet.

Further, before the network device exchanges the data of the first protocol with the peer network device, the peer network device may enable the capability of exchanging the data of the first protocol, and notify, by using the ninth packet, the network device that the peer network device has enabled the capability of exchanging the data of the first protocol.

Optionally, after the sending, by the network device, a fifth packet to the peer network device, the method further includes: disabling, by the network device, the capability of exchanging the data of the first protocol; and sending, by the network device, a sixth packet to the peer network device, where the sixth packet includes a field used to indicate the first protocol, the sixth packet further carries a field used to indicate the network device to disable the capability of exchanging the data of the first protocol, and a protocol followed by the sixth packet is the same as the protocol followed by the first packet.

Further, after enabling the capability of exchanging the data of the first protocol, the network device may disable the capability of exchanging the data of the first protocol, and notify, by using the sixth packet, the peer network device that the network device has disabled the capability of exchanging the data of the first protocol.

Optionally, after the sending, by the network device, a fifth packet to the peer network device, the method further includes: receiving, by the network device, a tenth packet sent by the peer network device, where the tenth packet includes a field used to indicate the first protocol, the tenth packet further carries a field used to indicate the peer network device to disable the capability of exchanging the data of the first protocol, and a protocol followed by the tenth packet is the same as the protocol followed by the first packet.

Further, after enabling the capability of exchanging the data of the first protocol, the peer network device may disable the capability of exchanging the data of the first protocol, and notify, by using the tenth packet, the network device that the peer network device has disabled the capability of exchanging the data of the first protocol.

Optionally, after the sending, by the network device, the first packet to a peer network device, the method further includes: receiving, by the network device, a seventh packet from the peer network device, where the seventh packet is used to indicate that the peer network device receives the first packet, and a protocol followed by the seventh packet is the same as the protocol followed by the first packet.

Further, after the network device sends the first packet to the peer network device, the network device may determine, by using the seventh packet, that the peer network device receives the first packet.

Optionally, after the sending, by the network device, a third packet to the peer network device, the method further includes: receiving, by the network device, an eighth packet from the peer network device, where the eighth packet is used to indicate that the peer network device receives the third packet, and a protocol followed by the eighth packet is the same as the protocol followed by the first packet. Similarly, after the peer network device receives the third packet sent by the network device, the peer network device may send the eighth packet to the network device, to notify the network device that the peer network device receives the third packet.

Optionally, after the receiving, by the network device, a fourth packet from the peer network device, the method further includes: sending, by the network device, an eleventh packet to the peer network device, where the eleventh packet is used to indicate that the network device receives the fourth packet, and a protocol followed by the eleventh packet is the same as the protocol followed by the first packet. Similarly, after the network device receives the fourth packet sent by the peer network device, the network device may send the eleventh packet to the peer network device, to notify the peer network device that the network device receives the fourth packet.

According to a second aspect, a network device is provided. The network device has a function of implementing a behavior of the packet sending method in the first aspect. The network device includes at least one module, and the at least one module is configured to implement the packet sending method provided in the first aspect.

According to a third aspect, a network device is provided. A structure of the network device includes a processor and a memory. The memory is configured to: store a program that supports the network device in performing the packet sending method provided in the first aspect, and store data used to implement the packet sending method provided in the first aspect. The processor is configured to execute the program stored in the memory. An operation apparatus of the storage device may further include a communications bus, and the communications bus is configured to establish a connection between the processor and the memory.

According to a fourth aspect, a computer-readable storage medium is provided. The computer-readable storage medium stores an instruction, and when the instruction is run on a computer, the computer is enabled to perform the packet sending method according to the first aspect.

According to a fifth aspect, a computer program product including an instruction is provided. When the computer program product runs on a computer, the computer is enabled to perform the packet sending method according to the first aspect.

Technical effects achieved in the second aspect, the third aspect, the fourth aspect, and the fifth aspect are similar to those achieved by using corresponding technical means in the first aspect. Details are not described herein.

### BRIEF DESCRIPTION OF DRAWINGS

FIG. 1 is a schematic diagram of a network system according to an embodiment of this application;
FIG. 2 is a flowchart of a packet sending method according to an embodiment of this application;
FIG. 3 is a schematic diagram of a format of a PAP packet header according to an embodiment of this application;
FIG. 4 is a schematic diagram of a negotiation exchange process according to an embodiment of this application;
FIG. 5 is a schematic diagram of a TE diagnosis scenario according to an embodiment of this application;
FIG. 6 is a schematic interaction diagram of an advertisement process according to an embodiment of this application;
FIG. 7 is a schematic interaction diagram of a query reply process according to an embodiment of this application;
FIG. 8A and FIG. 8B are a schematic diagram of a negotiation procedure method according to an embodiment of this application;
FIG. 9A and FIG. 9B are a schematic flowchart of a method for disabling a capability of querying a route flapping source of a routing device according to an embodiment of this application;
FIG. 10 is a schematic diagram of a format of a negotiation packet according to an embodiment of this application;
FIG. 11 is a schematic flowchart of a route flapping source query method according to an embodiment of this application;
FIG. 12 is a schematic diagram of a format of a data packet according to an embodiment of this application;
FIG. 13 is a schematic flowchart of a route advertisement method according to an embodiment of this application;
FIG. 14A and FIG. 14B are a schematic flowchart of a route flapping source query method according to an embodiment of this application;
FIG. 15 is a schematic structural diagram of a network device according to an embodiment of this application;
FIG. 16 is a schematic structural diagram of another network device according to an embodiment of this application; and
FIG. 17 is a schematic structural diagram of another network device according to an embodiment of this application.

### DESCRIPTION OF EMBODIMENTS

To make objectives, technical solutions, and advantages of this application clearer, the following further describes implementations of this application in detail with reference to accompanying drawings.

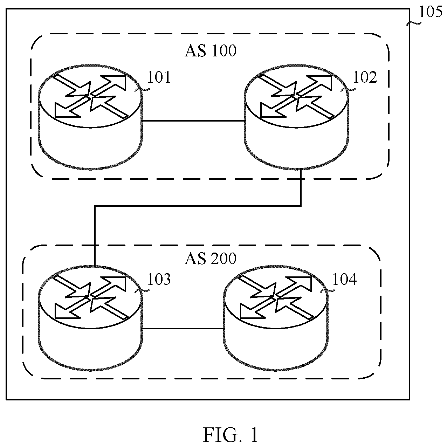

For ease of understanding of embodiments of this application, a communications system that is shown in FIG. 1 and that is applicable to the embodiments of this application is first used as an example for description. It should be understood that FIG. 1 is merely a simplified schematic diagram of an example for ease of understanding. The communications system may further include another network device not drawn in FIG. 1. As shown in FIG. 1, the communications system includes one or more autonomous systems (Autonomous System, AS), for example, an AS 100 and an AS 200. Each AS may include one or more routing devices, for example, a routing device 101 and a routing device 102 that are located in the AS 100 in FIG. 1, and a routing device 103 and a routing device 104 that are located in the AS 200 in FIG. 1. Different routing devices in a same AS may be connected, and different routing devices in different ASs may also be connected. For example, in FIG. 1, the routing device 101, the routing device 102, the routing device 103, and the routing device 104 are sequentially connected. A route advertisement direction is: the routing device 104-the routing device 103-the routing device 102-the routing device 101.

In actual application, route flapping may occur for a plurality of reasons, for example, a link between routing devices is faulty (for example, a link between the routing device 103 and the routing device 104 in FIG. 1 is faulty). For another example, a routing device may be faulty (for example, the routing device 104 in FIG. 1 is faulty). For still another example, route flapping may occur due to a configuration issue. For example, when a priority of a BGP route is set to be higher than that of a static route, the static route becomes inactive when the BGP route is imported to the static route. As a result, the static route is withdrawn by BGP, and the BGP route is inactive. The static route becomes active again because the BGP route is inactive. Repeatedly, the BGP route keeps flapping.

When route flapping occurs, if a source device that causes (the source device that causes may also be referred to as a flapping source in the embodiments of this application) is located as soon as possible, a basis may be laid for maintenance personnel to repair a link and recover a service as soon as possible. Based on this, an embodiment of this application provides a packet sending method, to quickly find a flapping source.

Before the embodiments of this application are described, several related concepts are first briefly described.

A BGP network is a network that supports a BGP protocol, for example, a BGP network, an Ethernet virtual private network (Ethernet Virtual Private Network, EVPN) that supports the BGP protocol, or a new generation multicast virtual private network (new generation multicast VPN, NGMVPN) that supports the BGP protocol.

In Chinese, a route does not distinguish between a noun and a verb. When the route refers to the noun, the corresponding English name is route. When the route refers to the verb, the corresponding English name is routing. The route (route) used as the noun may refer to a path through which a data packet is transmitted from a source address to a destination address. Routing (routing) as the verb may refer to an activity of transmitting a data packet from a source address to a destination address by using an interconnected network. In the embodiments of this application, a to-be-queried route may be a route used as the noun.

The routing device is a network layer device, provides two transmission modes: routing and forwarding, and may determine a routing path through which a data packet passes from a source port to a destination port. The routing device in the embodiments of this application may alternatively be a routing device that can establish a BGP protocol neighbor, for example, a router that can establish the BGP protocol neighbor, or a switch that can establish the BGP protocol neighbor. In the embodiments of this application, a first routing device, a second routing device, and a third routing device are three different routing devices. "First", "second", and "third" in the first routing device, the second routing device, and the third routing device in the embodiments of this application are merely used for differentiation, and do not have other limitation meanings.

A route prefix is used to indicate an internet protocol (Internet Protocol, IP) address and a mask of the to-be-queried route. For a concept of the route prefix, refer to the description in the standard RFC 6811: Route Prefix: The Prefix derived from a route. In this application, the route prefix may also be referred to as an IP prefix or prefix information.

An address family identifier (Address Family Identifier, AFI) is used to indicate an address family in which the to-be-queried route located. For a concept of the AFI, refer to description in the standard RFC 4271.

A subsequent address family identifier (Subsequent Address Family Identifier, SAFI) is used to indicate a subsequent address family in which the to-be-queried route is located. For a concept of the SAFI, refer to description in the standard RFC 4271.

A route distinguisher (Route Distinguisher, RD) is used to indicate a route distinguisher of the to-be-queried route. For a concept of the RD, refer to description in the standard RFC 4271.

The BGP neighbor relationship is also referred to as a BGP peer relationship. A BGP peer relationship between A and B indicates that A is a BGP peer of B and B is a BGP peer of A.

It should be noted that the packet sending method provided in this embodiment of this application may be applied to the scenario shown in FIG. 1, or may be applied to another scenario. Specific details are described in detail in the following embodiment, and are not described herein.

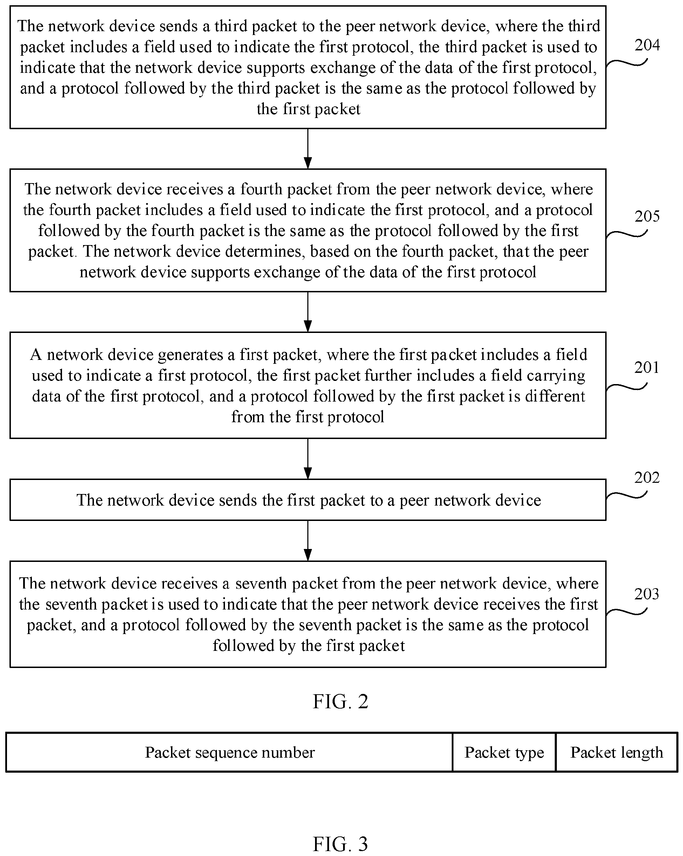

FIG. 2 is a flowchart of a packet sending method according to an embodiment of this application. The method is applied to a network device, and the network device may be the routing device in the communications system shown in FIG. 1. As shown in FIG. 2, the method includes the following steps.

Step 201: The network device generates a first packet, where the first packet includes a field used to indicate a first protocol, the first packet further includes a field carrying data of the first protocol, and a protocol followed by the first packet is different from the first protocol.

The first protocol is a protocol run by the network device. For example, the first protocol may be a BGP, or may be a resource reservation protocol (resource reservation protocol, RSVP). After the network device runs the first protocol, currently, there is no protocol that supports exchange between the network device and another network device for the generated data related to the protocol. In this embodiment of this application, this type of data related to running of the first protocol, for example, packet statistics collection and diagnostic information of the device for the protocol, is collectively referred to as the data of the first protocol.

Currently, the first protocol does not fully support exchange of the data of the first protocol between the network device and the another network device. Therefore, this embodiment of this application provides a general protocol that can serve various protocols: a protocol assisted protocol (protocol aided protocol, PAP). By using the PAP, the network device may exchange the data of the first protocol without extending the first protocol. Therefore, when the network device needs to exchange the data of the first protocol with a peer network device, the network device may generate the first packet based on the PAP in step 201. In other words, the protocol followed by the first packet is the PAP.

The data of the first protocol may be data such as a quantity of first protocol-based packets sent by the network device, a quantity of received first protocol-based packets, an error in configuration information of the network device, at least one entry in a forwarding table, diagnosis-related information, and related information of the first protocol.

The diagnosis-related information may include exchange of diagnosis information about BGP route flapping source tracing, and exchange of diagnosis information about an RSVP-TE tunnel establishment failure, for example, information that an ingress node supports a processing capability of notifying a downstream node of RSVP diagnosis information, information that the PAP supports the RSVP in sending and receiving the diagnosis information through a PAP channel, information that the ingress node supports delivering of a command line for diagnosing the tunnel establishment failure, information that the ingress node supports delivering of a command line for diagnosing tunnel flapping, information that the ingress node supports a diagnosis establishment failure, information that the ingress node supports diagnosis of label switched path (label switched path, LSP) flapping, information that a diagnosis initiating device asks whether another network device in a network is a flapping source, and information that the network device determines that the network device is the flapping source.

Scenarios of the foregoing diagnosis establishment failure may include: a scenario in which path computation fails due to a configuration error, a scenario in which an LSP establishment cannot be triggered due to a lack of basic configuration, a scenario in which a transit node fails to perform path computation, a root cause for which the ingress node fails to detect authentication, a root cause for which the ingress node detects that the RSVP is not enabled on an ingress interface, a scenario in which the RSVP is not enabled on an egress interface, a scenario in which the LSP establishment times out, a scenario in which an LSP path is excessively long, and a scenario in which a node or a link on which a packet is discarded cannot be quickly obtained.

Scenarios of diagnosing the LSP flapping may include: a scenario in which the LSP is torn down when it is detected that the egress interface goes offline (DOWN), a scenario in which the LSP is torn down when it is detected a neighbor hello (hello) timeout, a scenario in which the LSP is torn down when an upstream node detects a reservation (resv) timeout or the downstream node detects a path (path) timeout, a scenario in which FRR (fast reroute, FRR) unbinding causes offline after fast reroute is switched, a scenario in which LSP teardown is supported when bidirectional forwarding detection (bidirectional forwarding detection, BFD) for the RSVP is triggered by a diagnosis configuration, a scenario in which a LSP establishment failure or LSP offline occurs due to an received error packet, a scenario in which a root cause needs to be recorded due to offline of the LSP caused when a controller delivers admin_down (admin_down), and a scenario in which the ingress node does not go offline (UP) because a packet is discarded on a socket channel.

In addition, the related information of the first protocol may include information, for example, information that the RSVP supports triggering of packet capture in a socket (socket) sending/ receiving direction, information that the RSVP supports processing on a socket packet capture result, information that a protocol stack socket supports packet capture in the sending/ receiving direction and reporting of a packet capture result, and information that all newly added code of a TEM and the RSVP is controlled by a feature switch, and supports detection on an internet protocol (internet protocol, IP) conflict by using a plurality of VSs, PATH, or RESV.

In addition, the protocol followed by the first packet may be the PAP. The protocol followed by the first packet may be indicated by using a port identifier. For example, a user datagram protocol (user datagram protocol, UDP) port may be applied for in advance, and the UDP port is used to transmit a packet generated according to the PAP protocol.

In this embodiment of this application, the packet generated according to the PAP includes a PAP packet header (header) and a payload (payload). The payload may also be referred to as PAP message data, and the PAP packet header may also be referred to as a PAP header. This is not specifically limited in this embodiment of this application.

FIG. 3 is a schematic diagram of a format of a PAP packet header according to an embodiment of this application. As shown in FIG. 3, the PAP packet header includes a packet sequence number (sequence number), a packet type (type), and a packet total length (total length). The packet sequence number is used to uniquely identify a packet, and the packet sequence number is increased by 1 each time when a packet is sent.

The packet type is used to indicate a type of a packet. In this embodiment of this application, types of packets used to exchange the data of the first protocol may include a negotiation packet type, a query packet type, a reply packet type, an advertisement packet type, and an ACK packet type. In a possible implementation, when a value of a field corresponding to the packet type is equal to 1, it indicates that a current packet type is the negotiation packet type. When the value of the field corresponding to the packet type is 2, it indicates that the current packet type is the query packet type. When the value of the field corresponding to the packet type is equal to 3, it indicates that the current packet type is the reply packet type. When the value of the field corresponding to the packet type is equal to 4, it indicates that the current packet type is the advertisement packet type. When the value of the field corresponding to the packet type is equal to 5, it indicates that the current packet type is the ACK packet type. Certainly, there may alternatively be another correspondence between a packet type and a value of a corresponding field, and details are not described herein.

Certainly, in this embodiment of this application, the format of the PAP packet header may not be limited to the format shown in FIG. 3. Any format of the PAP packet header that can implement exchange of the data of the first protocol falls within the scope of this embodiment of this application.

In addition, the payload may include one or more of fields such as a version (version) number, a flag (flag) bit, a protocol identifier (protocol capability), application data (appdata), and a reply packet sequence number of the PAP.

Step 202: The network device sends the first packet to the peer network device.

After generating the first packet in step 201, the network device may further send the first packet in step 202.

A flag bit in the first packet may be used to indicate that an ACK packet needs to be sent or an ACK packet does not need to be sent. In a possible implementation, after the network device sends the first packet to the peer network device in step 201, to enable the network device to learn in time whether the peer network device successfully receives the data of the first protocol, the flag bit may be set to indicate that the ACK packet needs to be sent. In this case, after the network device sends the first packet to the peer network device, the network device may determine, by using the following step 203, whether the peer network device successfully receives the first packet.

Step 203: The network device receives a seventh packet from the peer network device, where the seventh packet is used to indicate that the peer network device receives the first packet, and a protocol followed by the seventh packet is the same as the protocol followed by the first packet.

In this case, a type of the seventh packet may be an ACK packet type. An implementation in which the network device receives the seventh packet from the peer network device may be as follows: If the network device receives, within first reference duration after sending the first packet, the seventh packet sent by the peer network device, the network device determines that the peer network device receives the first packet. If the network device does not receive the seventh packet within the first reference duration after sending the first packet, the network device may resend the first packet to the peer network device until the ACK packet is received or a first reference quantity of times for sending the first packet is exceeded. If a quantity of times of sending the first packet by the network device exceeds the first reference quantity of times, and the seventh packet is not received in this process, the network device determines that the peer network device does not receive the first packet.

The seventh packet is used to respond to the first packet. Therefore, a payload of the seventh packet may further carry a reply packet sequence number, and the reply packet sequence number carried in the payload of the seventh packet is the same as a packet sequence number in a PAP packet header of the responded first packet. In addition, both the first reference duration and the first reference quantity of times are set by a user. This is not specifically limited in this embodiment of this application.

In addition, in this embodiment of this application, to further improve flexibility of exchanging the data of the first protocol, before the network device exchanges the data of the first protocol with the peer network device by using the PAP, the network device may further negotiate with the peer network device, to determine whether the peer supports exchange of the data of the first protocol, and whether the peer enables diagnosis and data exchange capabilities of the first protocol. The capabilities refer to a capability of diagnosing the first protocol by the device and a capability of supporting exchange of the data of the first protocol with another device. Enabling the capabilities refers to enabling a fault diagnosis function and a protocol exchange function on the device. Therefore, as shown in FIG. 2, before step 201, the network device may further perform the following steps.

Step 204: The network device sends a third packet to the peer network device, where the third packet includes a field used to indicate the first protocol, the third packet is used to indicate that the network device supports exchange of the data of the first protocol, and a protocol followed by the third packet is the same as the protocol followed by the first packet.

In this case, a packet type of the third packet is a negotiation packet. In addition, when the peer network device receives the third packet, the peer network device may further send an eighth packet to the network device, and the network device receives the eighth packet from the peer network device. The eighth packet is used to indicate that the peer network device receives the third packet, and a protocol followed by the eighth packet is the same as the protocol followed by the first packet.

A packet type of the eighth packet is an ACK packet, a reply packet sequence number carried in a payload of the eighth packet is the same as a packet sequence number in a PAP packet header of the third packet, and a protocol identifier carried in the payload of the eighth packet is the same as a protocol identifier carried in a payload of the third packet. If the network device receives the eighth packet within second reference duration after sending the third packet, the network device may determine that the peer network device successfully receives the third packet.

The third packet may be used to notify the peer network device that a current network device supports exchange of the data of the first protocol. In this case, if the network device determines that the peer network device also supports exchange of the data of the first protocol, the network device may further enable a capability of exchanging the data of the first protocol, that is, enable the capability of exchanging the data of the first protocol, and send a fifth packet to the peer network device, where the fifth packet includes a field used to indicate the first protocol, the fifth packet further carries a field used to indicate the network device to enable the capability of exchanging the data of the first protocol, and a protocol followed by the fifth packet is the same as the protocol followed by the first packet. When receiving the fifth packet, the peer network device determines that the network device has enabled the capability of exchanging the data of the first protocol.

A packet type of the fifth packet may be a negotiation packet. The fifth packet carries a flag bit, and the flag bit is used to indicate the network device to enable the capability of exchanging the data of the first protocol. In addition, after the network device sends the fifth packet to the peer network device, the peer network device may also notify, by using an ACK packet, the network device that the peer network device receives the fifth packet. Details are not described herein.

Step 204 is used to explain how the network device notifies the peer network device whether exchange of the data of the first protocol is supported and whether the capability of exchanging the data of the first protocol is enabled. Likewise, the peer network device may also notify, by using the following step 205, the network device whether exchange of the data of the first protocol is supported and whether the capability of exchanging the data of the first protocol is enabled.

Step 205: The network device receives a fourth packet from the peer network device, where the fourth packet includes a field used to indicate the first protocol, and a protocol followed by the fourth packet is the same as the protocol followed by the first packet. The network device determines, based on the fourth packet, that the peer network device supports exchange of the data of the first protocol.

For a specific implementation of step 205, refer to step 204. Details are not described herein.

In addition, after the network device receives the fourth packet from the peer network device, the network device may send an eleventh packet to the peer network device, where the eleventh packet is used to indicate that the network device receives the fourth packet, and a protocol followed by the eleventh packet is the same as the protocol followed by the first packet.

A packet type of the eleventh packet is an ACK packet. To be specific, in this embodiment of this application, after the network device receives the fourth packet sent by the peer network device, the network device may send the eleventh packet to the peer network device, to notify the peer network device that the network device receives the fourth packet.

In addition, after the network device enables the capability of exchanging the data of the first protocol, and sends the fifth packet to the peer network device, the peer network device may also enable the capability of exchanging the data of the first protocol, and send a ninth packet to the network device. The ninth packet includes a field used to indicate the first protocol, the ninth packet further carries a field used to indicate the peer network device to enable the capability of exchanging the data of the first protocol, and a protocol followed by the ninth packet is the same as the protocol followed by the first packet. After receiving the ninth packet, the network device may send an ACK packet to the peer network device, to notify the peer network device that the network device has received the ninth packet.

To be specific, in this embodiment of this application, the network device may negotiate, by using the fifth packet and the ninth packet, with the peer network device about enabling the capability of exchanging the data of the first protocol.

Optionally, after the network device exchanges the data of the first protocol with the peer network device, the network device may further autonomously disable a PAP function, to reduce power consumption of the network device, and notify the peer network device that the PAP function has been disabled. Specifically, in a possible implementation, the network device disables the capability of exchanging the data of the first protocol, and the network device sends a sixth packet to the peer network device, where the sixth packet includes a field used to indicate the first protocol, the sixth packet further carries a field used to indicate the network device to disable the capability of exchanging the data of the first protocol, and a protocol followed by the sixth packet is the same as the protocol followed by the first packet. After the network device sends the sixth packet to the peer network device, when receiving the sixth packet, the peer network device may send an ACK packet to the network device, to notify the network device that the peer network device has received the sixth packet.

Optionally, the peer network device may alternatively disable a PAP function by itself, to reduce power consumption of the network device, and notify the network device that the network device has disabled the PAP function. Specifically, in a possible implementation, the network device receives a tenth packet sent by the peer network device, where the tenth packet includes a field used to indicate the first protocol, the tenth packet further carries a field used to indicate the peer network device to disable the capability of exchanging the data of the first protocol, and a protocol followed by the tenth packet is the same as the protocol followed by the first packet. After the peer network device sends the tenth packet to the network device, when receiving the tenth packet, the network device may send an ACK packet to the peer network device, to notify the peer network device that the network device has received the sixth packet.

Packet types of the third packet and the fourth packet, the fifth packet and the ninth packet, and the sixth packet and the tenth packet may all be negotiation packets. The negotiation packet includes a PAP packet header. A packet type in the PAP packet header of the negotiation packet is a negotiation packet type, and a "flag bit" field may not need to be set in a payload of the negotiation packet. In this case, the negotiation packet is merely used to notify one party that the other party supports exchange of the data of the first protocol. For ease of description, this type of negotiation packet is referred to as a support function negotiation packet. An application data field in the negotiation packet may be an optional field, and is used to carry information of another type, for example, traffic adjustment and artificial intelligence (device AI) information of a device end. This is not specifically limited in this embodiment of this application.

Definitely, the "flag bit" field may alternatively be set in the payload of the negotiation packet. The flag bit may be used to negotiate a PAP support capability, and is further used to indicate to enable/disable the PAP function. When the flag bit of the negotiation packet is used to negotiate the PAP support capability, the negotiation packet is a support function negotiation packet, for example, the third packet and the fourth packet. When the flag bit in the negotiation packet is used to indicate to enable the PAP function, the network device may notify, by using the negotiation packet, the peer network device that the network device has enabled the PAP function. For ease of subsequent description, this type of negotiation packet is referred to as a negotiation enabled packet, for example, the fifth packet and the ninth packet. When the flag bit in the PAP packet header of the negotiation packet is used to indicate to disable the PAP function, the network device may notify, by using the negotiation packet, the peer network device that the network device has disabled the PAP function. For ease of subsequent description, this type of negotiation packet is referred to as a negotiation disabled packet, for example, the sixth packet and the tenth packet.

In addition, the flag bit in the negotiation packet may be further used to indicate whether an ACK needs to be sent for the packet. To be specific, in this embodiment of this application, the negotiation packet may include two types of flag bit fields. The first type is used to negotiate the AP support capability, and is further used to indicate to enable/disable the PAP function. The second type is used to indicate whether the ACK needs to be sent for the packet.

Table 1 shows a correspondence between a field in a negotiation packet and a meaning of the field in the negotiation packet according to an embodiment of this application. As shown in Table 1, in the negotiation packet, when a value of a field "packet type" is 1, it indicates that a current packet is a negotiation packet. When a value of a C bit in a flag bit is 1, it indicates capability negotiation. When the value of the C bit is 0, it indicates a capability enabling/disabling indication. When a value of an A bit is 1, it indicates that an ACK needs to be sent. When the value of the A bit is 0, it indicates that the ACK does not need to be sent.

**Table 1 Correspondence between a field in a PAP packet header in a negotiation packet and a meaning of the field**

| Field | Meaning |
|---|---|
| Packet type (type) | When a value of the type is 1, it indicates that a current packet is a negotiation packet. |
| Flag (flag) bit | When a value of a C bit is 1, it indicates capability negotiation. When the value of the C bit is 0, it indicates a capability enabling/disabling indication. |
| | When a value of an A bit is 1, it indicates that an ACK needs to be sent. When the value of the A bit is 0, it indicates that the ACK does not need to be sent. |

Specifically, when the value of the C bit is 0, it indicates the capability enabling/disabling indication. Therefore, the C bit may be combined with a protocol identifier field in the negotiation packet, to distinguish whether the current packet is a negotiation enabled packet or a negotiation disabled packet. For example, when the value of the C bit is 0, if a value of a specified bit corresponding to the first protocol in the protocol identifier field in the negotiation packet is 1, it indicates that the negotiation packet is a negotiation enabled packet, and is used to notify that the capability of exchanging the data of the first protocol based on the PAP has been enabled. The first protocol is any protocol in the protocol identifier field. If the value of the specified bit corresponding to the first protocol in the protocol identifier field in the negotiation packet is 0, it indicates that the negotiation packet is a negotiation disabled packet, and is used to notify that the capability of exchanging the data of the first protocol based on the PAP has been disabled. The A bit, the C bit, and the specified bit all may be flexibly configured. A specific location of each bit is not specifically limited in this embodiment of this application.

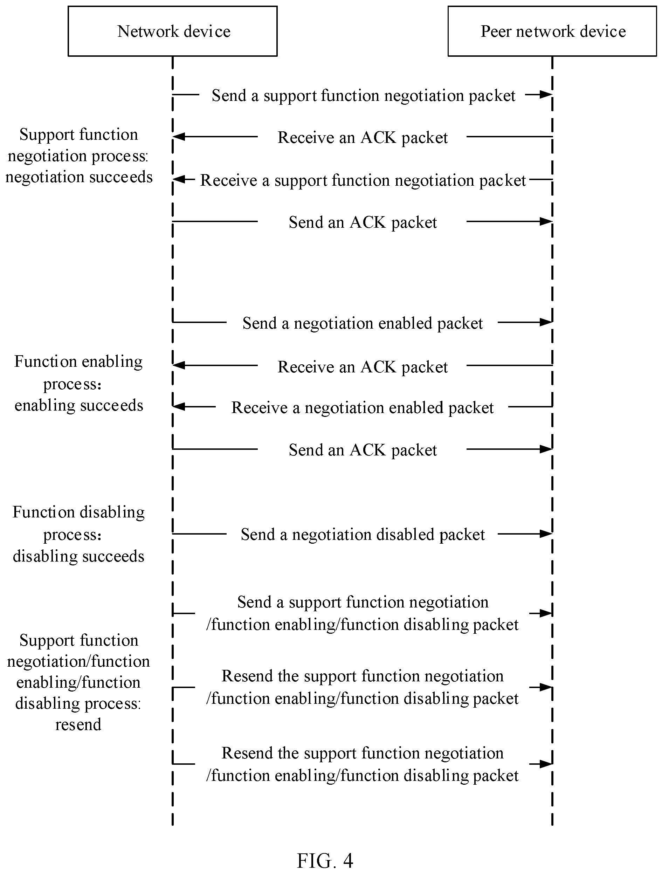

Therefore, in this embodiment of this application, as shown in FIG. 4, exchange of negotiation packets mainly includes the following three types of exchange processes.

In a first type of exchange process, two network devices notify each other of their supported capabilities. This round of negotiation does not involve function enabling. As shown in Table 1, the value of the C bit in the flag bit field may be used to indicate that the current negotiation packet is a support function negotiation packet (Neg. (cap.)).

In a possible implementation, as shown in FIG. 4, a network device sends a support function negotiation packet to a peer network device. If an ACK packet is forcibly sent (for example, the value of the A bit in Table 1 is 1), the network device sends the support function negotiation packet to the peer network device, receives an ACK packet of the support function negotiation packet within a first specified time after sending the support function negotiation packet, receives a support function negotiation packet sent by the peer network device within the first specified time, and sends an ACK packet to the peer network device for the received support function negotiation packet. In this process, it is considered that negotiation of a support function succeeds. Both the ACK packet sent by the peer device after the peer device receives the support function negotiation packet, and the ACK packet sent by the network device after the network device receives the ACK packet and the support function negotiation packet from the peer network device refer to the protocol identifier field, but the two network devices are not required to completely match. Specific implementation is determined by configurations of the two network devices. If an ACK is not forcibly sent (for example, the value of the A bit in Table 1 is 0), an action of the ACK in the foregoing procedure is deleted.

If an ACK packet is forcibly sent (for example, the value of the A bit in Table 1 is 1), when an ACK packet of any support function negotiation packet is not received within the first specified time, retransmission needs to be performed for several times based on a first quantity of retransmission times (for example, the first quantity of retransmission times may be 2). If any ACK packet is not received after several retransmission times, it is considered that negotiation of the function support fails.

If an ACK is set not to be forcibly sent (for example, the value of the A bit in Table 1 is 0), when a function negotiation packet of any function negotiation packet is not received within a second specified time, retransmission needs to be performed for several times based on a second quantity of retransmission times. If the function negotiation packet sent by the peer network device is not received within the second specified time after several retransmission times, it is considered that negotiation fails.

In a second type of exchange process, after successfully negotiating the supported capabilities, the two network devices notify, by using negotiation enabled packets (Neg. (open)), each other that one or more capabilities jointly supported by the two network devices are enabled. The negotiation enabled packet may be sent at any moment after the capability is negotiated, and may be sent for a plurality of times. A flag bit field of the negotiation enabled packet indicates that the packet includes a flag bit of an enabling/disabling indication. Specifically, a value of a C bit in the flag bit field may be set to 0, and the protocol identifier field may be combined to indicate that the current negotiation packet is a negotiation enabled packet.

In a possible implementation, as shown in FIG. 4, the network device sends the negotiation enabled packet to the peer network device, where the negotiation enabled packet is used to indicate that the network device has enabled a PAP function. If an ACK packet is forcibly sent (for example, the value of the A bit in Table 1 is 1), the network device sends the negotiation enabled packet to the peer network device, receives an ACK packet for the negotiation enabled packet within a third specified time after sending the negotiation enabled packet, receives the negotiation enabled packet sent by the peer network device within the third specified time, and sends an ACK packet for the received negotiation enabled packet to the peer network device. In this process, it is considered that negotiation of function enabling succeeds. Both the ACK packet sent by the peer network device after the peer network device receives the negotiation enabled packet and the ACK packet sent by the network device after the network device receives the ACK packet and the negotiation enabled packet from the peer network device refer to the protocol identifier field, but the two network devices are not required to completely match. Specific implementation is determined by configurations of the two devices. If an ACK is not forcibly sent (for example, the value of the A bit in Table 1 is 0), the action of the ACK in the foregoing procedure is deleted.

As shown in FIG. 4, if an ACK is forcibly sent (for example, the value of the A bit in Table 1 is 1), when an ACK packet of any negotiation enabled packet is not received in the third specified time, retransmission needs to be performed for several times based on a third quantity of retransmission times (for example, the third quantity of retransmission times may be 2). If any ACK packet is not received, it is considered that negotiation of enabling fails.

If an ACK is set not to be forcibly sent (for example, the value of the A bit in Table 1 is 0), after any negotiation enabled packet is sent, if the negotiation enabled packet sent by the peer network device is not received within a fourth specified time, retransmission needs to be performed for several times based on a fourth quantity of retransmission times. If the negotiation enabled packet sent by the peer network device is not received within the fourth specified time, it is considered that negotiation of enabling fails.

To be specific, in this embodiment of this application, any network device in a network may negotiate with another network device, to notify the another network device that the network device enables a PAP function.

In a third type of exchange process, after successfully negotiating the supported capabilities, and after exchanging one or more negotiation enabled packets, the two network devices may send one or more negotiation disabled packets (Neg. (close)), to indicate that the network devices have disabled the enabled functions. A flag bit field of the negotiation disabled packet indicates that the packet includes a flag bit of an enabling/disabling indication. Specifically, a value of a C bit in the flag bit field may be set to 0, and the protocol identifier field may be combined to indicate that the current negotiation packet is a negotiation disabled packet.

In a possible implementation, as shown in FIG. 4, if an ACK packet is forcibly sent (for example, the value of the A bit in Table 1 is 1), at any time, any network device expects to notify a peer network device that the network device has disabled a function of supporting one or more specific protocol data (a bit corresponding to a specific protocol in the protocol identifier field is set to 0). To be specific, the network device sends a negotiation disabled packet. If an ACK packet sent by the peer network device is received within a fifth specified time, it is confirmed that exchange successfully ends. If an ACK packet is set not to be forcibly sent (for example, the value of the A bit in Table 1 is 0), at any time, any network device expects to notify a peer that the network device has disabled a function of supporting one or more specific protocol data (a bit corresponding to a specific protocol in the protocol identifier field is set to 0). To be specific, the network device sends a negotiation disabled packet. It may be considered that exchange of an indication for disabling the PAP ends without receiving an ACK packet. In this case, a negotiation failure of disabling does not occur.

If an ACK packet is forcibly sent (for example, the value of the A bit in Table 1 is 1), when an ACK packet of any negotiation disabled packet is not received within the fifth specified time, retransmission needs to be performed for several times (for example, 2) based on a fifth quantity of retransmission times. If any ACK packet is not received after several retransmission times, it is considered that exchange of the indication for disabling fails.

The foregoing specified times may be the same or may be different. The quantities of retransmission times may also be the same or may be different. This is not specifically limited in this embodiment of this application.

In the foregoing embodiment, after a network device sends a packet to another network device, the another network device usually needs to send an ACK packet, to notify the network device that the another network device has received the packet. Table 2 shows a correspondence between a field in an ACK packet and a meaning of the field in the ACK packet according to this embodiment of this application. As shown in Table 2, in the ACK packet, when a value of a field "packet type" is 5, it indicates that a current packet is an ACK packet. A packet sequence number indicated by a field "reply packet sequence number" carried in a payload needs to be the same as a packet sequence number in a packet header of a to-be-replied packet. For all ACK packets in this embodiment of this application, refer to Table 2. Details are not described herein.

**Table 2 Correspondence between a field in a PAP packet header in an ACK packet and a meaning of the field**

| Field | Meaning |
|---|---|
| Packet type (type) | When a value of the type is 5, it indicates that a current packet is an ACK packet. |
| A reply packet sequence number (answer sequence number) carried in a payload | The reply packet sequence number (answer sequence number) carried in the payload is the same as a sequence number of a to-be-replied packet. |

In this embodiment of this application, the network device may transmit the data of the first protocol to the peer network device by using the first packet. Because the protocol followed by the first packet is different from the first protocol, regardless of which protocol the first protocol is specifically, the data of the first protocol may be exchanged by using the first packet. In other words, this application provides a general protocol, to transmit the data of the first protocol. This improves packet sending flexibility.

In this embodiment of this application, there may be the following two application scenarios in which the network device exchanges the data of the first protocol by using step 201 and step 203. The following separately describes the two application scenarios. The following two application scenarios are merely used as examples for description, and do not constitute a limitation on an application scenario of exchanging the data of the first protocol provided in this embodiment of this application. For example, the network device may alternatively exchange the data of the first protocol in another scenario in which network optimization needs to be performed, and details are not described herein.

In a first scenario, after the TE tunnel fails to establish a connection, if a root cause needs to be quickly diagnosed, a network device of a faulty node needs to send diagnosis information to a network device located on the ingress node.

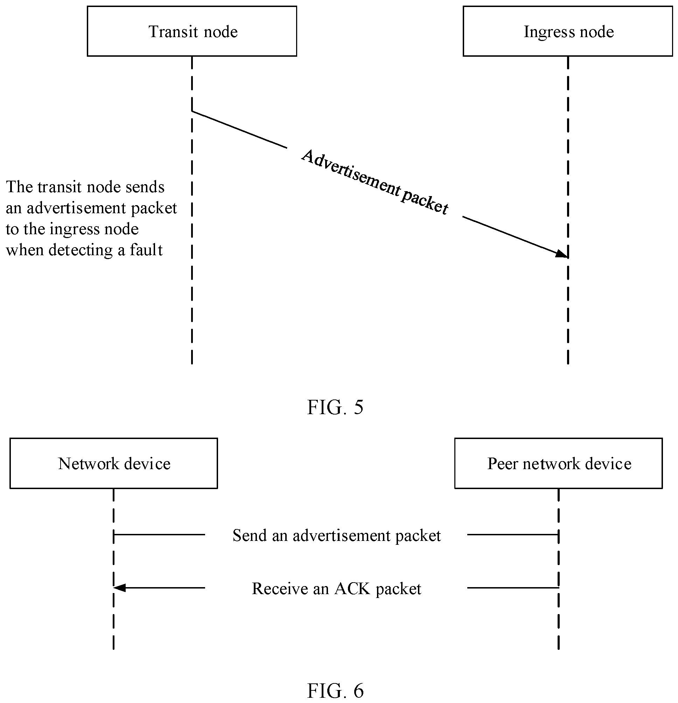

In this case, a network device located at the transit node is equivalent to the network device in step 201, and the network device located on the ingress node is equivalent to the peer network device in step 201. The packet type in the PAP packet header in step 201 is an advertisement packet type, and the first packet sent by the network device to the peer network device is also referred to as an advertisement packet. As shown in FIG. 5, after the TE tunnel fails to establish the connection, if the transit node detects a fault, the transit node sends an advertisement packet to the ingress node.

Table 3 shows a correspondence between a field in an advertisement packet and a meaning of the field in the advertisement packet according to an embodiment of this application. As shown in Table 3, in a PAP packet header of the advertisement packet, when a value of a field "packet type" is 4, it indicates that a current packet is an advertisement packet. When a value of a "flag bit" in a payload field of the advertisement packet is 1, it indicates that a peer network device needs to send an ACK packet. When the value of the "flag bit" in the payload field of the advertisement packet is 0, it indicates that the peer network device does not need to send the ACK packet. In addition, as shown in Table 3, a protocol identifier field in the advertisement packet is used to indicate that data of which protocol is specifically carried in the advertisement packet. In a possible implementation, assuming that the advertisement packet carries the data of the first protocol, a value of a bit corresponding to the first protocol in the protocol identifier field is set to 1, and a value of a bit corresponding to another protocol in the protocol identifier field is set to 0.

For example, as shown in FIG. 6, after the network device sends an advertisement packet, the peer network device sends an ACK packet to the network device after receiving the advertisement packet, namely, the seventh packet in step 203. If the ACK packet sent by the peer network device is received within 10 seconds, it is determined that advertisement succeeds. If the ACK packet is not received within 10 seconds, the network device resends the advertisement packet. When a quantity of times of sending the advertisement packet is greater than 3, and the ACK packet is not received within 10 seconds after the advertisement packet is sent for the third time, the network device determines that the peer cannot receive the advertisement packet, and at this time, stops sending the advertisement packet.

**Table 3 Correspondence between a field in an advertisement packet and a meaning of the field in the advertisement packet**

| Field | Meaning |
|---|---|
| Packet type (type) | When a value of the type is 4, it indicates that a current packet is an advertisement packet. |
| Protocol identifier (protocol capability) | Indicate that data of which protocol is specifically carried in the advertisement packet. |
| Flag (flag) bit | When a value of the flag bit is 1, it indicates that the peer needs to send an ACK packet. |
| | When the value of the flag bit is 0, it indicates that the peer does not need to send the ACK packet. |

In a second scenario, BGP source tracing is used to search for the flapping source.

In this case, the network device receives a second packet from the peer network device, where the second packet includes a field used to indicate the first protocol, the second packet is used to indicate the network device to feed back the data of the first protocol to the peer network device, and a protocol followed by the second packet is the same as the protocol followed by the first packet. Correspondingly, in step 201, the network device generates the first packet in response to the second packet.

A packet type of the second packet is a query packet type, and the second packet may also be referred to as a query packet. A packet type of the first packet is a reply packet type, and the first packet may also be referred to as a reply packet. For example, the diagnosis initiating device may send a query packet to the another network device in the network, to query whether the another network device is a flapping source. If the another network device determines that the another network device is the flapping source, the another network device needs to send a reply packet to the diagnosis initiating device, to indicate that the another network device is the flapping source. In this case, the another device is equivalent to the network device in step 201, and the diagnosis initiating device is equivalent to the peer network device in step 201.

In the second scenario, because the query packet sent by the peer network device to the network device is also used to exchange the data of the first protocol, the protocol followed by the query packet is the same as the protocol followed by the first packet, for example, the PAP.

Table 4 shows a correspondence between a field in a query packet or a reply packet and a meaning of the field in the query packet or the reply packet according to an embodiment of this application. As shown in Table 4, in a PAP packet header of the query packet or the reply packet, when a value of a field "packet type" is 2, it indicates that a current packet is a query packet; and when the value of the field "packet type" is 3, it indicates that the current packet is a reply packet. In addition, for the reply packet, a payload field may further include a "flag bit" field. When a value of the "flag bit" field is 1, it indicates that the peer needs to send an ACK packet. When the value of the "flag bit" field is 0, it indicates that the peer does not need to send the ACK packet. The query packet may not include a "flag bit" field, or a "flag bit" field may be set, but a specific value in the "flag bit" field may not be set.

As shown in Table 4, a protocol identifier field in the query packet or the reply packet is used to indicate that data of which protocol is specifically carried in the corresponding packet. In a possible implementation, assuming that the packet carries the data of the first protocol, a value of a bit corresponding to the first protocol in the protocol identifier field is set to 1, and a value of a bit corresponding to another protocol in the protocol identifier field is set to 0.

In addition, for the query packet, an application data field in the packet is used to indicate specific data of the protocol that the device expects to query, and a specific format may be self-defined. For the reply packet, an application data field in the packet is used to indicate data that needs to be returned according to content indicated by the application data field in the query packet sent by the peer device, and a specific format may also be self-defined.

**Table 4 Correspondence between a field in a query packet or reply packet and a meaning of the field in the query packet or reply packet**

| Field | Meaning |
|---|---|
| Packet type (type) | When a value of the type is 2, it indicates that a current packet is a query packet. |
| | When the value of the type is 3, it indicates that the current packet is a reply packet. |
| Protocol identifier (protocol capability) | Indicate that data of which protocol is specifically carried in the corresponding packet. |
| Flag (flag) bit | When a value of the flag bit is 1, it indicates that the peer needs to send an ACK packet. |
| | When the value of the flag bit is 0, it indicates that the peer does not need to send the ACK packet. |

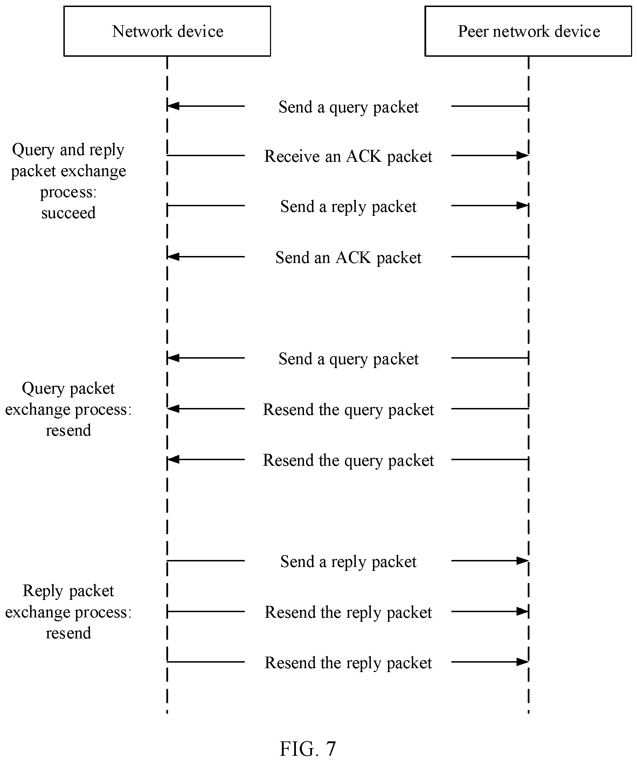

As shown in FIG. 7, if an ACK of a query packet is forcibly sent (the value of the corresponding flag bit in Table 4 is 1), any network device sends a query packet to a peer network device at any time, and receives an ACK packet from the peer network device and a reply packet sent by the peer network device within a specified time. If the ACK packet is required in the received reply packet, the ACK packet is sent, and this procedure ends. If the ACK is not required in the received reply packet, this procedure ends after the reply packet is received. If an ACK of a query packet is set not to be forcibly sent (the value of the corresponding flag bit in Table 4 is 1), any network device sends a query packet to a peer network device at any time, and receives a reply packet sent by the peer network device within a specified time. If an ACK packet is required in the reply packet, the ACK packet is sent to the peer network device, and this procedure ends. If the ACK packet is not required in the reply packet, this procedure ends when the reply packet is received.

Correspondingly, as shown in FIG. 7, if the ACK of the query packet is forcibly sent (the value of the corresponding flag bit in Table 4 is 1), when the network device finishes sending the query packet but does not receive the ACK packet sent by the peer network device within the specified time, retransmission needs to be performed for several times (for example, 2). If any ACK packet is not received after several retransmission times, it is considered that exchange fails. If the ACK of the query packet is set not to be forcibly sent (the value of the corresponding flag bit in Table 4 is 1), after the query packet is sent, when the reply packet is not received within the specified time, retransmission needs to be performed for several times. If any reply packet is not received after several retransmission times, it is considered that exchange fails.

To be specific, in the second scenario, after the peer network device sends the query packet to the network device, the network device may first send an ACK packet for the query packet, to notify the peer network device that the network device has received the query packet. After sending the ACK packet, the network device sends a reply packet to the peer network device. Certainly, after sending the query packet, the peer network device may alternatively determine, directly based on whether the reply packet is received, whether the peer end receives the query packet. This is not specifically limited in this embodiment of this application.

The following embodiment is used as an example to describe the second scenario "BGP source tracing is used to search for the flapping source", and the following embodiment does not constitute a limitation on the embodiment corresponding to FIG. 2.

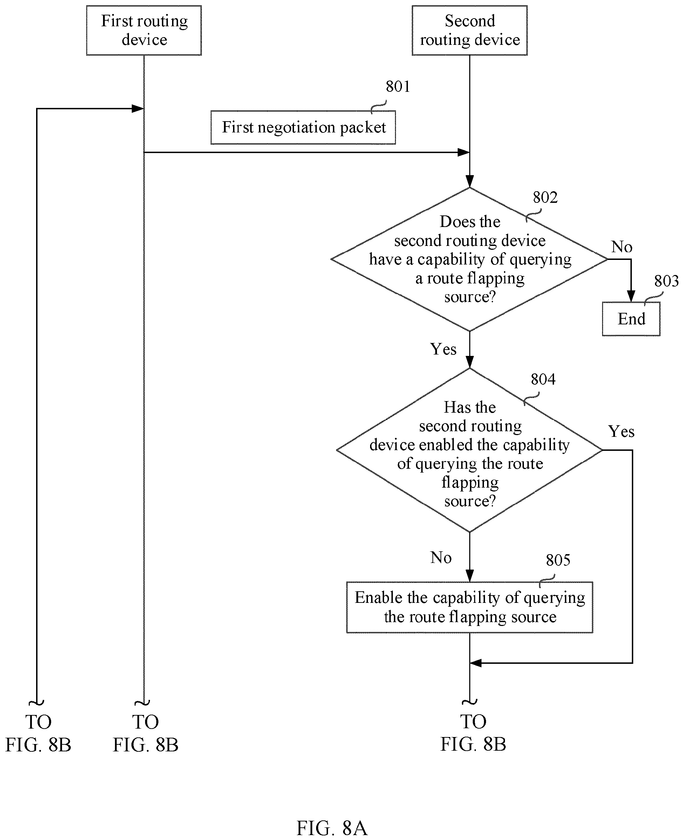

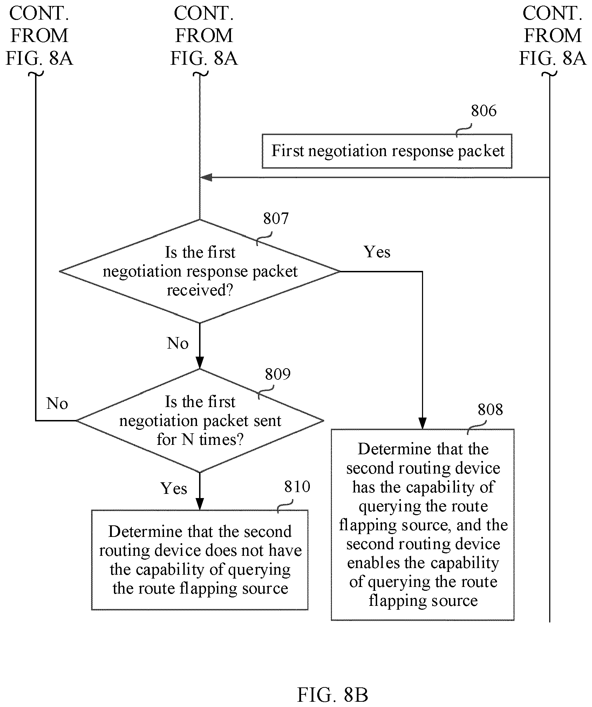

FIG. 8A and FIG. 8B are a schematic diagram of an example of a negotiation procedure method from a perspective of device interaction. As shown in FIG. 8A and FIG. 8B, the method includes the following steps.

Step 801: A first routing device sends a first negotiation packet to a second routing device, where the first negotiation packet indicates the second device to enable a capability of querying a route flapping source.

An occasion on which the first routing device sends the first negotiation packet may be flexibly determined based on a specific situation. For example, the occasion may be initiated after the first routing device and the second routing device establish a BGP neighbor relationship, or may be initiated after the first routing device enables the capability of querying the route flapping source (in this embodiment of this application, enabling the capability of querying the route flapping source may also be referred to as enabling a source tracing negotiation capability). Optionally, when the BGP neighbor relationship between the second routing device and the first routing device is DOWN (that the BGP neighbor relationship is DOWN may also be referred to as that the BGP neighbor relationship is not established), if the second routing device has and enables the capability of querying the route flapping source, the capability of querying the route flapping source of the second routing device can be disabled.

The first negotiation packet may also be described as an ST_OPEN capability negotiation packet or the like.

Step 802: After receiving the first negotiation packet, the second routing device determines, based on the first negotiation packet, whether the second routing device has the capability of querying the route flapping source.

In step 802, if the second routing device does not have the capability of querying the route flapping source, the second routing device may feed back, to the first routing device, indication information used to indicate that the second routing device does not have the capability of querying the route flapping source, or may not feed back information to the first routing device. For example, step 803 may be performed.

In step 802, if the second routing device has the capability of querying the route flapping source, the second routing device may perform step 804.

Step 803: End the procedure of the method.

Step 804: The second routing device determines whether the second routing device has enabled the capability of querying the route flapping source.

In step 804, if the second routing device does not enable the capability of querying the route flapping source, the second routing device may perform step 805.

In step 804, if the second routing device has enabled the capability of querying the route flapping source, the second routing device may perform step 806.

Step 805: The second routing device enables the capability of querying the route flapping source.

Step 806: The second routing device sends a first negotiation response packet to the first routing device, where the first negotiation response packet is a response packet of the first negotiation packet.

Step 807: The first routing device determines whether the first negotiation response packet is received.

In step 807, in a possible implementation, the first routing device may determine whether the first negotiation response packet is received within first preset duration.

In step 807, if the first routing device determines that the first negotiation response packet is received, the first routing device may perform step 808.

In step 807, if the first routing device determines that the first negotiation response packet is not received, the first routing device may end the procedure of the method, or may perform step 809, or may perform step 810.

A solution shown in FIG. 8A and FIG. 8B is an example of performing step 809 when the first routing device determines that the first negotiation response packet is not received. In another possible implementation, in step 801, the first routing device may periodically send the first negotiation packet. For example, when the BGP neighbor relationship between the second routing device and the first routing device is UP (that the BGP neighbor relationship is UP may also be referred to as that the BGP neighbor relationship is established), the first routing device periodically sends the first negotiation packet to the second routing device by using 1 minute as a period. When step 807 is performed, if none of response packets corresponding to three consecutive first negotiation packets is received, step 810 is directly performed.

Step 808: The first routing device determines, based on the first negotiation response packet, that the second routing device has the capability of querying the route flapping source, and the second routing device enables the capability of querying the route flapping source.

Step 809: The first routing device determines whether the first negotiation packet is sent for N times.

In step 809, in a possible implementation, the first routing device may determine whether the first negotiation packet is sent for N times in second preset duration, where N is a positive integer, and N may be set based on a specific situation, for example, 3.

In step 809, if the first routing device determines that the first negotiation packet is not sent for N times (for example, a quantity of times of sending, by the first routing device, a first negotiation packet within the second preset duration is less than N), the first routing device may repeatedly perform step 801, to repeatedly send the first negotiation packet.

In step 809, if the first routing device determines that the first negotiation packet is sent for N times (for example, the quantity of times of sending, by the first routing device, the first negotiation packet within the second preset duration is equal to N), the first routing device may perform step 810.

Step 810: The first routing device determines that the second routing device does not have the capability of querying the route flapping source.

A solution procedure shown in FIG. 8A and FIG. 8B describes an example in which how the first routing device negotiates with the second routing device, so that the second routing device enables the capability of querying the route flapping source when having the capability of querying the route flapping source. The second routing device may also perform steps similar to those performed by the first routing device, so that the first routing device enables the capability of querying the route flapping source when having the capability of querying the route flapping source. Details are not described herein.

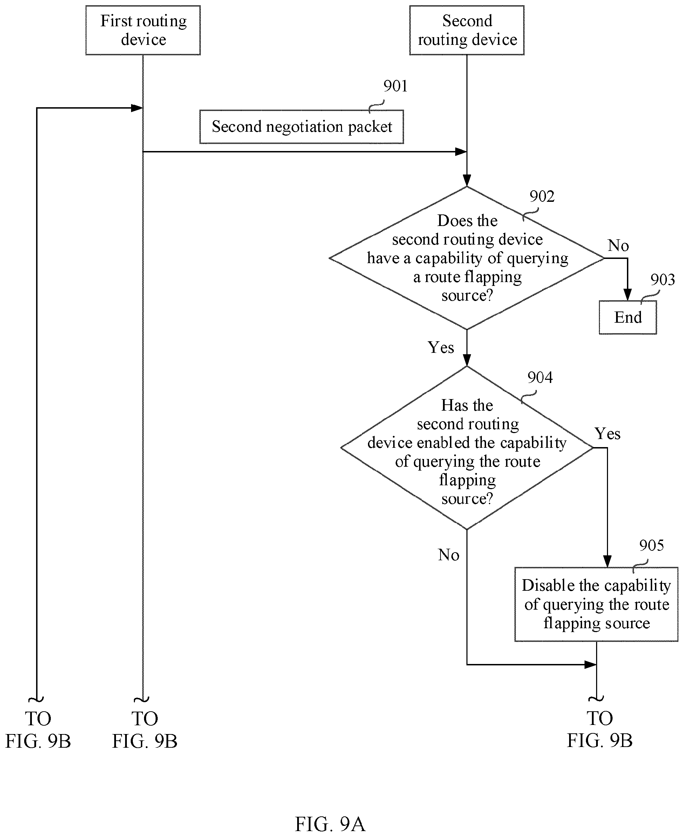

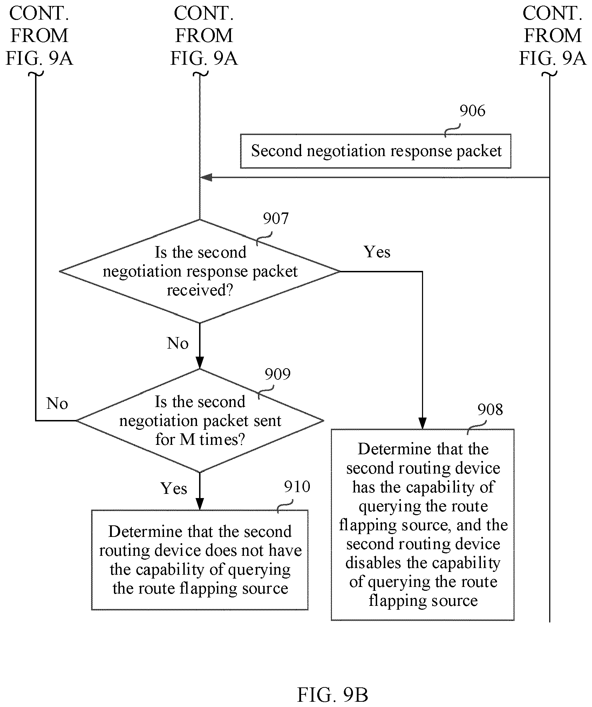

FIG. 9A and FIG. 9B are a schematic flowchart of an example of a method for disabling a capability of querying a route flapping source of a routing device from a perspective of device interaction. In this embodiment of this application, disabling the capability of querying the route flapping source may also be referred to as disabling the capability of querying the route flapping source, that is, disabling may also be replaced with disabling. As shown in FIG. 9A and FIG. 9B, the method includes the following steps.

Step 901: A first routing device sends a second negotiation packet to a second routing device, where the second negotiation packet indicates the second device to disable a capability of querying a route flapping source.

An occasion on which the first routing device sends the second negotiation packet may be flexibly determined based on a specific situation. For example, the occasion is initiated when the first routing device discovers that a neighbor relationship between the first routing device and the second routing device is DOWN. For another example, the occasion on which the first routing device initiates the second negotiation packet may be manually and flexibly configured.

In a possible implementation, the first routing device may send the second negotiation packet to the second routing device when determining that the second routing device has and enables the capability of querying the route flapping source and has enabled the capability of querying the route flapping source. In this case, after receiving the second negotiation packet, the second routing device may directly perform step 905.

In another possible implementation, the first routing device sends the second negotiation packet to the second routing device when the first routing device needs to disable the capability of querying the route flapping source. The second routing device may have the capability of querying the route flapping source, or may not have the capability of querying the route flapping source. In addition, the second routing device may enable or disable the capability of querying the route flapping source when having the capability of querying the route flapping source. In this case, when receiving the second negotiation packet, the second routing device may perform step 902 or step 904. A person skilled in the art may flexibly determine perform step 902 or step 904. FIG. 9A and FIG. 9B are described by using an example in which the second routing device performs step 902 after receiving the second negotiation packet 301.

The second negotiation packet may be described as an ST_OPEN capability negotiation packet. When both the second negotiation packet and the first negotiation packet are referred to as ST OPEN capability negotiation packets, a flag bit may be set in the second negotiation packet referred to as the STOPEN capability negotiation packet, and is used to distinguish from the first negotiation packet referred to as the ST_OPEN capability negotiation packet.

Step 902: After receiving the second negotiation packet, the second routing device determines, based on the second negotiation packet, whether the second routing device has the capability of querying the route flapping source.

In step 902, if the second routing device does not have the capability of querying the route flapping source, the second routing device may feed back, to the first routing device, indication information used to indicate that the second routing device does not have the capability of querying the route flapping source, or may not feed back information to the first routing device. For example, step 903 may be performed.

In step 902, if the second routing device has the capability of querying the route flapping source, the second routing device may perform step 904.

Step 903: End the procedure of the method.

Step 904: The second routing device determines whether the second routing device has enabled the capability of querying the route flapping source.

In step 904, if the second routing device has enabled the capability of querying the route flapping source, the second routing device may perform step 905.

In step 904, if the second routing device does not enable the capability of querying the route flapping source, the second routing device may perform step 906.

Step 905: The second routing device disables the capability of querying the route flapping source.

Step 906: The second routing device sends a second negotiation response packet to the first routing device, where the second negotiation response packet is a response packet of the second negotiation packet.

Step 907: The first routing device determines whether the second negotiation response packet is received.

In the foregoing step 907, in a possible implementation, the first routing device may determine whether the second negotiation response packet is received within fourth preset duration.

In step 907, if the first routing device receives the second negotiation response packet, the first routing device may perform step 908.

In step 907, if the first routing device does not receive the second negotiation response packet (for example, the second negotiation response packet is not received within the fourth preset duration), the first routing device may end the procedure of the method, or may perform step 909, or may perform step 910.

A solution shown in FIG. 9A and FIG. 9B is an example of performing step 909 when the first routing device does not receive the second negotiation response packet. In another possible implementation, in step 901, the first routing device may periodically send the second negotiation packet, for example, periodically send the second negotiation packet to the second routing device by using 1 minute as a period. When step 807 is performed, if none of response packets corresponding to three consecutive second negotiation packets is received, step 910 is directly performed.

Step 908: The first routing device determines, based on the second negotiation response packet, that the second routing device has the capability of querying the route flapping source, and the second routing device disables the capability of querying the route flapping source.

Step 909: Whether the first routing device sends the second negotiation packet for M times.

In step 909, in a possible implementation, the first routing device may determine whether the second negotiation packet is sent for the M times in fifth preset duration, where M is a positive integer, and M may be set based on a specific situation, for example, 3.

In step 909, if a quantity of sending the second negotiation packet by the first routing device is less than M (for example, the quantity of sending the second negotiation packet within the fifth preset duration is less than M), the first routing device may repeatedly perform step 901, to repeatedly send the second negotiation packet.

In step 909, if the quantity of sending the second negotiation packet by the first routing device is not less than M (for example, the quantity of sending the second negotiation packet within the fifth preset duration is equal to M), the first routing device may perform step 910.

Step 910: The first routing device determines that the second routing device does not have the capability of querying the route flapping source.

A solution procedure shown in FIG. 9A and FIG. 9B describes an example in which how the first routing device negotiates with the second routing device, so that the second routing device disables the capability of querying the route flapping source. The second routing device may also perform steps similar to those performed by the first routing device, so that the first routing device disables the capability of querying the route flapping source. Details are not described herein.

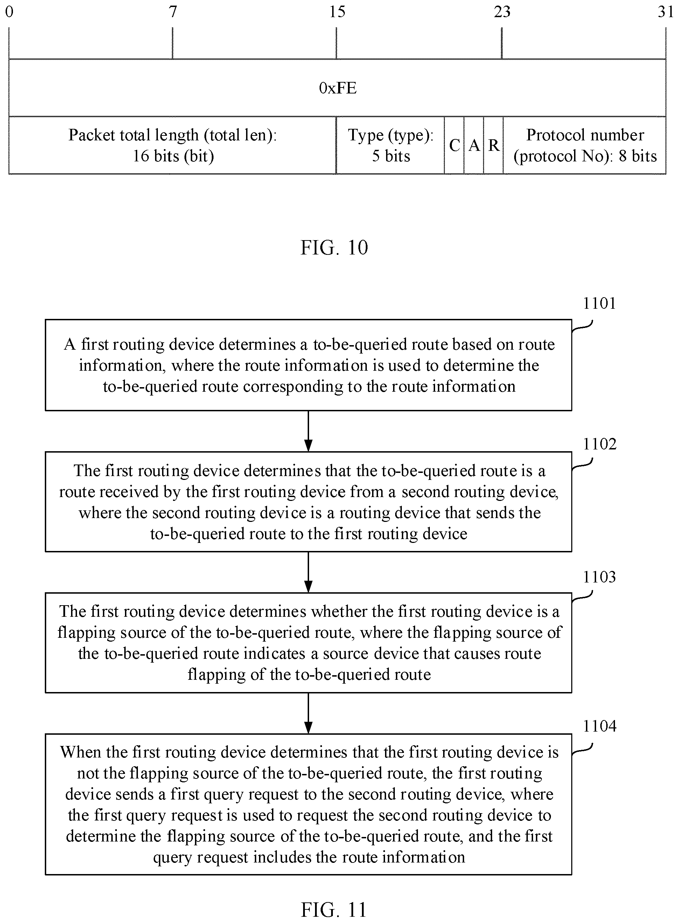

Formats of the first negotiation packet, the first negotiation response packet, the second negotiation packet, and the second negotiation response packet in FIG. 8A and FIG. 8B and FIG. 9A and FIG. 9B may be flexibly set, and the first negotiation packet, the first negotiation response packet, the second negotiation packet, and the second negotiation response packet may be collectively referred to as a negotiation packet. FIG. 10 is a schematic diagram of an example of a format of a negotiation packet according to an embodiment of this application.

As shown in FIG. 10, a packet identifier field in the negotiation packet may occupy four bytes. For example, 0xFE or another value may be filled in, as shown in FIG. 10. The packet identifier field may be used to indicate that the packet is the negotiation packet defined in this embodiment of this application or a data packet mentioned in the following content. In this way, the negotiation packet and the data packet defined in the embodiments of this application can be distinguished from another packet defined in the prior art.

A total packet length (totallen) field in the negotiation packet may occupy 16 bits (bit), and may be used to indicate a total length of the packet.

A type (type) field in the negotiation packet may occupy five bits, and may be used to indicate a type of the packet. When the packet is a negotiation packet, a type field of the packet carries content used to indicate that the packet is the negotiation packet. For example, when a value of the type field is set to 1, it may indicate that the packet is a first negotiation packet or a second negotiation packet.

A C field may occupy one bit. For example, when a value of the C field is set to 0, it may indicate that the packet is a second negotiation packet. When the value of the C field is set to 1, it may indicate that the packet is a first negotiation packet. When both the second negotiation packet and the first negotiation packet are referred to as ST OPEN capability negotiation packets, the C field may be used to identify flag bits of the first negotiation packet and the second negotiation packet.

An Afield may occupy one bit. For example, when a value of the Afield is set to 1, it may indicate that the packet is a response packet (the first negotiation response packet or the second negotiation response packet). When the value of the A field is set to 0, it may indicate that the packet is a non-response packet (the first negotiation packet or the second negotiation packet).

An R field may occupy one bit, and may be a reserved field. The R field may be set to 0 by default.

Optionally, the packet may further include a protocol number (protocol No) field shown in FIG. 10, may occupy eight bits, and may carry a protocol number.

The foregoing example describes a solution in which the first routing device and the second routing device each may flexibly enable or disable the capability of querying the route flapping source. Optionally, the first routing device and the second routing device may alternatively be uniformly set to enable the capability of querying the route flapping source. When the first routing device and the second routing device each enable the capability of querying the route flapping source, an embodiment of this application provides a route flapping source query method. The method is applied to a border gateway protocol BGP network, and a meaning of the BGP network is shown in the foregoing content, and details are not described. The BGP network includes a first routing device. FIG. 11 is a schematic flowchart of an example of a route flapping source query method according to an embodiment of this application. As shown in FIG. 11, the method includes the following steps.

Step 1101: A first routing device determines a to-be-queried route based on route information, where the route information is used to determine the to-be-queried route corresponding to the route information.

In this embodiment of this application, a routing device may be classified into two types: a source tracing initiating device and a source tracing assistance device. The source tracing initiating device may be a device that initiates a query event, and the query event is an event of querying a flapping source of the to-be-queried route. A routing device other than the source tracing initiating device in all routing devices participating in the query event may be referred to as the source tracing assistance device. The source tracing initiating device may be any routing device in the to-be-queried route. In a possible implementation, the source tracing initiating device may be a downstream routing device (for example, a downstream routing device or a penultimate-hop routing device in a route advertisement direction) in the route advertisement direction, for example, the routing device 101 or the routing device 102 in FIG. 1. In another possible implementation, the source tracing initiating device may be a downstream routing device in a route advertisement direction, for example, the routing device 101 in FIG. 1. In this way, the query event may be initiated by a routing device that detects a service, or may be initiated at a place closest to an affected service. This can be more suitable for an actual application scenario, and provide greater convenience for an actual service operator.

In a possible implementation, the source tracing initiating device triggers the query event in a plurality of manners. For example, a command manually input by a user may trigger the source tracing initiating device to initiate the query event. For example, when finding that the service is affected, the user may initiate the command to trigger the source tracing initiating device to initiate the query event. Alternatively, some rules may be preset. When these rules are met, the source tracing initiating device may be triggered to initiate the query event. For example, these rules may be as follows: When CPU occupancy is higher than an occupancy threshold, or when it is detected that a service on the to-be-queried route is affected, for example, a routing device detects that a packet cannot be decapsulated or a routing entry cannot be found after decapsulation, the source tracing initiating device may be triggered to initiate the query event. For another example, the source tracing initiating device may initiate the query event when detecting that route flapping occurs.

The route information of the to-be-queried route may be manually input by the user, or may be route information that is of a flapping route and that is selected by the source tracing initiating device. For example, the source tracing initiating device randomly selects route information of one or more routes from flapping routes, and initiates a query event for route information of each of the selected one or more routes. To be specific, the route information of each route is used as route information corresponding to a to-be-queried route in this embodiment of this application, to execute the solutions in this embodiment of this application, so as to find the flapping source of the to-be-queried route. The flapping route may be a route whose duration between a time at which the route is last updated and a current time is less than sixth preset duration. The sixth preset duration may be flexibly determined, for example, 2 minutes. A time point at which the route is last updated is also referred to as a timestamp of the route.

When a first routing device is a source tracing initiating device, the first routing device determines the to-be-queried route based on the route information, and then queries for the flapping source that causes flapping of the to-be-queried route.

When the first routing device is a source tracing assistance device, the first routing device may receive a query request sent by another routing device. For example, before the first routing device determines the to-be-queried route based on the route information, the first routing device receives a second query request sent by a third routing device. The third routing device is a routing device configured to receive the to-be-queried route from the first routing device. The second query request is used to request the first routing device to determine the flapping source of the to-be-queried route. The third routing device may be described as a next-hop routing device of the first routing device in a route advertisement direction. The second query request includes the route information.

After step 1101, the first device may determine whether the to-be-queried route is a route received from a second routing device. There may be two results: The to-be-queried route is not the route received by the first routing device from the second routing device, and the to-be-queried route is the route received by the first routing device from the second routing device.

When the first routing device determines that the to-be-queried route is not the route received by the first routing device from the second routing device, the first routing device may determine that the to-be-queried route is a local route of the first routing device. In this case, it may be determined that a source device that causes route flapping of the to-be-queried route is the first routing device. In this case, the first routing device may directly feed back a first query response, where the first query response indicates the flapping source of the to-be-queried route, and the flapping source is the first routing device. When the first routing device is a source tracing initiating device (the source tracing initiating device is a device that initiates a query event), the first routing device may directly feed back the first query response to the user. When the first routing device is not a source tracing initiating device (the first routing device is a source tracing assistance device), the first routing device may forward the first query response to another routing device, for example, the third routing device. When the first routing device determines that the first routing device is the flapping source of the to-be-queried route, the first routing device may further directly end the procedure of the method, or may analyze a cause of flapping of the first routing device, or may further repair the flapping source.

Further, when determining that the to-be-queried route is not the route received by the first routing device from the second routing device, the first routing device may further determine a route type of the to-be-queried route, for example, whether the to-be-queried route is an aggregated route or an imported route, and send the first query response including indication information of the route type of the to-be-queried route, to provide the user with further assistance information, and provide more convenience for subsequent maintenance work of the user. The imported route in this embodiment of this application may be a route learned by a BGP from another routing protocol, for example, an interior gateway protocol (Interior Gateway Protocol, IGP), a user network route (user network route, UNR), a static route, or a direct route. The aggregated route in this embodiment of this application may be referred to as a route generated by using a route aggregation command.

For the other result that the to-be-queried route is the route received by the first routing device from the second routing device, refer to step 1102.

Step 1102: The first routing device determines that the to-be-queried route is the route received by the first routing device from the second routing device, where the second routing device is a routing device that sends the to-be-queried route to the first routing device.

That the to-be-queried route is the route received by the first routing device from the second routing device may also be described as that the to-be-queried route is learned by the first routing device from the second routing device. To be specific, the route advertisement direction is advertised from the second routing device to the first routing device, the second routing device may also be described as a previous-hop routing device, and the previous-hop routing device is configured to advertise a route to the first routing device in the route advertisement direction.

Step 1103: The first routing device determines whether the first routing device is the flapping source of the to-be-queried route, where the flapping source of the to-be-queried route indicates the source device that causes route flapping of the to-be-queried route.

In this embodiment of this application, the source device that causes route flapping of the to-be-queried route may also be referred to as the flapping source of the to-be-queried route.

After step 1103, there are two results. One result is that the first routing device determines the first routing device as the flapping source of the to-be-queried route. In this case, the first routing device may feed back the first query response, and a specific feedback object may be determined based on a role of the first routing device. For example, when the first routing device is a source tracing initiating device (the source tracing initiating device is a device that initiates a query event), the first routing device may directly feed back the first query response to the user. When the first routing device is not a source tracing initiating device (the first routing device is a source tracing assistance device), the first routing device may forward the first query response to another routing device, for example, the third routing device.

For the other result that the first routing device determines that the first routing device is not the flapping source of the to-be-queried route, refer to step 1104.

Step 1104: When the first routing device determines that the first routing device is not the flapping source of the to-be-queried route, the first routing device sends a first query request to the second routing device, where the first query request is used to request the second routing device to determine the flapping source of the to-be-queried route, and the first query request includes the route information.

It can be learned from the foregoing solution of step 1101 to step 1104 that, in this embodiment of this application, when route flapping occurs and when the first routing device is not the flapping source, the first routing device may send the first query request to the second routing device, so that the second routing device continues to query the flapping source. It can be learned that, compared with a solution in the prior art in which maintenance personnel check routing devices one by one, the route flapping source query method can save manpower.

In step 1101, in an optional implementation, the route information includes a route prefix, and the route prefix is used to indicate an internet protocol IP address and a mask of the to-be-queried route. That a first routing device determines a to-be-queried route based on route information includes: determining, by the first routing device, the to-be-queried route based on the route prefix. A specific method for determining, by the first routing device, the to-be-queried route based on the route prefix, refer to the section 7 and section 8 in RFC 4364.

In step 1101, in another optional implementation, the route information includes a route prefix, an address family identifier AFI, a subsequent address family identifier SAFI, and a route distinguisher RD. The AFI is used to indicate an address family in which the to-be-queried route is located, the SAFI is used to indicate a subsequent address family in which the to-be-queried route is located, and the RD is used to indicate a route distinguisher of the to-be-queried route. That a first routing device determines a to-be-queried route based on route information includes: determining, by the first routing device, the to-be-queried route based on the AFI, the SAFI, the RD, and the route prefix. A specific method for determining, by the first routing device, the to-be-queried route based on the AFI, the SAFI, the RD, and the route prefix, refer to the section 7 and section 8 in RFC 4364.

In this embodiment of this application, in an optional implementation, the route information may further include a sequence number and/or an identifier of the source tracing initiating device. The sequence number is used to identify a query event used to query the to-be-queried route, and the identifier of the source tracing initiating device is used to identify an identifier of a device that initiates the query event.

This embodiment of this application provides a possible implementation for performing step 1103. The first routing device determines, based on the to-be-queried route, whether duration between a time at which a BGP neighbor relationship between the first routing device and the second routing device last flaps and the current time is less than a first threshold. In this possible implementation, in step 1104, the first routing device may determine, based on the to-be-queried route, that the duration between the time at which the BGP neighbor relationship between the first routing device and the second routing device flaps and the current time is less than the first threshold, and the first routing device sends the first query request to the second routing device. In this implementation, when determining that the to-be-queried route is learned from the second routing device, the first routing device determines that the second routing device and the first routing device are in the BGP neighbor relationship. In this possible implementation, duration between a time of last sending, by the first routing device, an update packet of the to-be-queried route to the second routing device and the current time may be less than a second threshold, or may not be less than a second threshold. In this possible implementation, if the duration between the time at which the BGP neighbor relationship between the first routing device and the second routing device last flaps and the current time is less than the first threshold, it indicates that the BGP neighbor relationship between the first routing device and the second routing device is unstable. This may be a cause of flapping of the to-be-queried route. Therefore, the flapping source of the to-be-queried route can be more accurately determined in this implementation.

This embodiment of this application provides another possible implementation for performing step 1103. The first routing device determines whether a duration between a time of last sending, by the first routing device, an update packet of the to-be-queried route to the second routing device and the current time is less than a second threshold. In this possible implementation, in step 1104, when the first routing device determines that the duration between the time of last sending the update packet of the to-be-queried route to the second routing device and the current time is less than the second threshold, the first routing device sends the first query request to the second routing device. The update packet of the to-be-queried route may also be referred to as a refresh packet of the to-be-queried route. For related descriptions of the refresh packet, refer to related descriptions in the section 2 and section 3 in RFC 2918. The first routing device may send the update packet to the second routing device due to causes such as policy modification and configuration modification. In this possible implementation, the duration between the time at which the BGP neighbor relationship between the first routing device and the second routing device last flaps and the current time may be less than the first threshold or may not be less than the first threshold. In this possible implementation, if the duration between the time of last sending, by the first routing device, the update packet of the to-be-queried route to the second routing device and the current time is less than the second threshold, it indicates that there is a high probability that the update packet of the to-be-queried route sent by the first routing device causes flapping of the to-be-queried route. Therefore, the flapping source of the to-be-queried route can be more accurately determined in this implementation.

This embodiment of this application provides a third possible implementation for performing step 1103. The first routing device determines, based on the to-be-queried route, whether duration between a time at which a BGP neighbor relationship between the first routing device and the second routing device last flaps and the current time is less than a first threshold, and determine whether duration between a time of last sending, by the first routing device, an update packet of the to-be-queried route to the second routing device and the current time is less than a second threshold. In this possible implementation, in step 1104, when the first routing device determines, based on the to-be-queried route, that the duration between the time at which the BGP neighbor relationship between the first routing device and the second routing device flaps and the current time is less than the first threshold, and when the first routing device determines that the duration between the time of last sending, by the first routing device, the update packet of the to-be-queried route to the second routing device and the current time is less than the second threshold, the first routing device sends the first query request to the second routing device. In this implementation, two parameters are combined: the duration between the time at which the BGP neighbor relationship between the first routing device and the second routing device last flaps and the current time and the duration between the time of last sending, by the first routing device, the update packet of the to-be-queried route to the second routing device and the current time, to more accurately determine the flapping source of the to-be-queried route.

In this embodiment of this application, the second threshold may be equal to the first threshold, or may not be equal to the first threshold. In this embodiment of this application, the first threshold may be flexibly set based on an actual situation. For example, first thresholds corresponding to two routing devices may be set to be different, or may be set to be the same, and second thresholds corresponding to two routing devices may be set to be different, or may be set to be the same. For example, when the first routing device is a source tracing initiating device, in several possible implementations in which the first routing device performs step 1103, a value of the first threshold is 2 minutes, and a value of the second threshold is also 2 minutes. When the first routing device is a source tracing assistance device, in several possible implementations in which the first routing device performs step 1103, the first threshold and the second threshold may be set based on a timestamp of the to-be-queried route on the source tracing initiating device. The timestamp of the to-be-queried route on the source tracing initiating device specifically refers to a time at which the to-be-queried route is last updated on the source tracing initiating device. For example, when the first routing device is a source tracing assistance device, the value of the first threshold may be obtained by adding a first duration threshold to duration between the timestamp of the to-be-queried route on the source tracing initiating device and the current time, and the value of the second threshold may be obtained by adding a second duration threshold to the duration between the timestamp of the to-be-queried route on the source tracing initiating device and the current time. The first duration threshold and the second duration threshold may be equal or may not be equal. For example, both the first duration threshold and the second duration threshold may be set to 60 seconds.

It can be learned from the foregoing two examples that, in this embodiment of this application, when the routing device plays different roles, the first threshold and the second threshold may be separately set. On one hand, flexibility of the solution can be improved. On the other hand, the first threshold corresponding to the source tracing assistance device and the second threshold corresponding to the source tracing assistance device are considered with reference to the timestamp of the to-be-queried route on the source tracing initiation device, so that the flapping source of the to-be-queried route can be more accurately and more closely determined.

This embodiment of this application provides a possible implementation for implementing step 1104. When determining that the first routing device is not the flapping source of the to-be-queried route, the first routing device sends the first query request to the second routing device. The second routing device may have a capability of querying the flapping source of the to-be-queried route, or may not have a capability of querying the flapping source of the to-be-queried route. In this case, when the second routing device has the capability of querying the flapping source of the to-be-queried route and has enabled the capability of querying the flapping source of the to-be-queried route, the second routing device may query the flapping source of the to-be-queried route based on the first query request.

This embodiment of this application provides another possible implementation for implementing step 1104. When the first routing device determines that the first routing device is not the flapping source of the to-be-queried route, and when the second routing device has a capability of querying the flapping source of the to-be-queried route, the first routing device sends the first query request to the second routing device. In this way, the second routing device may determine the flapping source of the to-be-queried route based on the first query request.

In the another possible implementation for implementing step 1104, if the first routing device determines that the first routing device is not the flapping source of the to-be-queried route, but the second routing device does not have the capability of querying the flapping source of the to-be-queried route, the first routing device may end a procedure of querying the flapping source. Further, the first routing device may feed back a second query response, where the second query response may include route information of a historical routing device traversed by the query event, and the second query response may also provide a query interface for the user, so that the user can perform further screening on the to-be-queried route with reference to the fed-back second query response. This can save manpower. The first query response may further include any one or more of attribute information such as the to-be-queried route and the timestamp of the to-be-queried route on the source tracing initiating device.

In the another possible implementation for implementing step 1104, if the first routing device determines that the first routing device is not the flapping source of the to-be-queried route, but the capability of querying the flapping source of the to-be-queried route of the second routing device is disabled, the first routing device may first enable, by using the foregoing negotiation procedure, the capability of querying the flapping source of the to-be-queried route of the second routing device, or may directly send the first query request to the second routing device. When the second routing device determines that the capability of querying the flapping source of the to-be-queried route needs to be used, the second routing device independently enables the capability of querying the flapping source of the to-be-queried route, and queries the flapping source of the to-be-queried route based on the first query request. The first routing device may further end a procedure of querying the flapping source. Further, the first routing device may feed back a second query response, where the second query response may include route information of a historical routing device traversed by the query event, and the second query response may also provide a query interface for the user, so that the user can perform further screening on the to-be-queried route with reference to the fed-back second query response. This can save manpower.

After step 1104, if the second routing device determines that the second routing device is not the flapping source of the to-be-queried route, the second routing device may continue to perform source tracing upstream in the route advertisement direction, to query the flapping source of the to-be-queried route. If the second routing device determines that the second routing device is the flapping source of the to-be-queried route, the second routing device may send the first query response to the first routing device. Correspondingly, the first routing device receives the first query response sent by the second routing device, where the first query response indicates the flapping source of the to-be-queried route. A manner in which the first routing device processes the received first query response may be determined based on the role of the first routing device. For example, when the first routing device is a source tracing initiating device (the source tracing initiating device is a device that initiates a query event), the first routing device may directly feed back the first query response to the user. When the first routing device is not a source tracing initiating device (the first routing device is a source tracing assistance device), the first routing device may forward the first query response to another routing device, for example, the third routing device.

In step 1104, in a possible implementation, when the first routing device determines that the first routing device is not the flapping source of the to-be-queried route, the first routing device may determine whether a quantity of historical routing devices traversed by the query event is less than a quantity threshold. When the quantity of historical routing devices traversed by the query event is less than the quantity threshold, the first routing device sends the first query request to the second routing device. When the quantity of historical routing devices traversed by the query event is not less than the quantity threshold, the second query response may alternatively be fed back. The quantity of historical routing devices traversed by the query event may be a quantity of routing devices corresponding to the to-be-queried route from the source tracing initiating device to the first routing device. The quantity threshold may be set based on a specific situation, for example, 20.

When the first routing device is a source tracing assistance device, the first routing device receives the second query request. In step 1104, the first routing device determines that the first routing device is not the flapping source of the to-be-queried route, and may increase the quantity of historical routing devices traversed by the query event in the second query request by 1, to update the second query request. Further, the first routing device may send the first query request to the second routing device based on an updated second query request. For example, a source address and a destination address in the updated second query request may be modified, to obtain the first query request.

In step 1101 to step 1104, the first routing device may be a source tracing initiating device, or may be a source tracing assistance device. When the first routing device is the source tracing assistance device, this embodiment of this application provides a possible implementation. In this implementation, after the first routing device receives the second query request from the third routing device, the first routing device may determine at least one candidate to-be-queried route based on the route information included in the second query request, and determine the to-be-queried route from the one or more candidate to-be-queried routes, where the to-be-queried route is an optimal route in the one or more candidate to-be-queried routes. In this embodiment of this application, the at least one candidate to-be-queried route refers to the one or more candidate to-be-queried routes. The optimal route may also be described as a best route. The optimal route is selected from all active routes based on a specific rule. For example, the optimal route may be a route that has a shortest path and that is selected from the at least one candidate to-be-queried route. For another example, the optimal route may be a route that has least service load and that is selected from the at least one candidate to-be-queried route. For still another example, the optimal route may be a route that has best comprehensive performance and that is selected from the at least one candidate to-be-queried route after a plurality of elements are measured for each of the at least one candidate to-be-queried route, and different weights are set for each of the plurality of elements. The plurality of elements may be content such as a path length and a quantity of service volumes. In addition, before step 1102, the first routing device determines that duration between a timestamp of the to-be-queried route on the first routing device and the current time is less than a third threshold, where the timestamp of the to-be-queried route on the first routing device is used to indicate a time at which the to-be-queried route is last updated on the first routing device. The third threshold may be set based on the timestamp of the to-be-queried route on the source tracing initiating device. The timestamp of the to-be-queried route on the source tracing initiating device specifically refers to a time at which the to-be-queried route is last updated on the source tracing initiating device. For example, a value of the third threshold may be obtained by adding a third duration threshold to the duration between the timestamp of the to-be-queried route on the source tracing initiating device and the current time, where the third duration threshold may be set to 60 seconds.

When the first routing device is the source tracing assistance device, if the first routing device does not hit a candidate to-be-queried route based on the route information included in the second query request (for example, when all candidate to-be-queried routes have been withdrawn, the first routing device cannot hit the candidate to-be-queried route that matches the route information), it indicates that the candidate to-be-queried route that matches the route information does not exist on the first routing device. Alternatively, the first routing device hits the one or more candidate to-be-queried routes based on the route information included in the second query request, but none of the candidate to-be-queried routes is an optimal route (for example, each of all the candidate to-be-queried routes is an inactive route or an active but non-optimal route) (When a route is the optimal route, parameter information of the route may include indication information indicating that the route is the optimal route, and the first routing device may determine, based on the indication information, whether the route is the optimal route). In the two cases, in a first possible implementation, the first routing device may directly end the query event. In another possible implementation, the first routing device may alternatively wait for a period of time (for example, 3 seconds) and then perform query again, or may perform query for several times at an interval of specific duration. If no candidate to-be-queried route is found, the query event may be ended. In a third possible implementation, the first routing device may alternatively feed back the second query response.

When the first routing device is the source tracing assistance device, there is another case. In this case, the to-be-queried route may be determined based on the route information, but the duration between the timestamp of the to-be-queried route on the first routing device and the current time is not less than the third threshold. In this case, the query event can be directly ended. Alternatively, it may be further determined whether duration between an update time of a next-hop iterated route of the route and the current time is less than a fourth threshold. If the duration is less than the fourth threshold, the first query response may be fed back, where the first query response may indicate that the first routing device is the flapping source. When the duration is not less than the fourth threshold, the second query response may be fed back, or whether the to-be-queried route that matches the route information is hit may be queried again after a period of time, or whether the to-be-queried route that matches the route information is hit may be repeatedly queried for a plurality of times at an interval of specific duration.

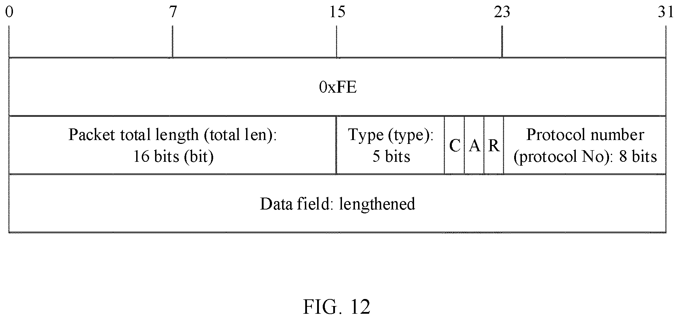

The first query request, the second query request, the first query response, and the second query response in FIG. 11 and the related solution may be collectively referred to as a data packet, and a format of the data packet may be flexibly set. In this embodiment of this application, the first query request may be described as a first BST_QUERY packet, and the second query request may be described as a second BSTQUERY packet. In this embodiment of this application, the first query response may be described as a first BST_REPLY packet, and the second query response may be described as a second BSTREPLY packet. FIG. 12 is a schematic diagram of an example of a format of a data packet according to an embodiment of this application.

As shown in FIG. 12, a packet identifier field in the data packet may occupy four bytes. For example, 0xFE or another value may be filled in, as shown in FIG. 12. The packet identifier field may be used to indicate that the packet is the negotiation packet defined in this embodiment of this application or the data packet mentioned in the following content. In this way, the negotiation packet and the data packet defined in the embodiments of this application can be distinguished from another packet defined in the prior art.

A total packet length (totallen) field in the data packet may occupy 16 bits (bit), and may be used to indicate a total length of the packet.

A type (type) field in the data packet may occupy five bits, and may be used to indicate a type of the packet. When the packet is a data packet, a type field of the packet carries content used to indicate that the packet is the data packet. For example, when a value of the type field is set to 2, it may indicate that the packet is the data packet.

A C field may occupy one bit. For example, when a value of the C field is set to 0, it may indicate that the packet is a second negotiation packet. When the value of the C field is set to 1, it may indicate that the packet is a first negotiation packet.

An Afield may occupy one bit. For example, when a value of the Afield is set to 1, it may indicate that the packet is a response packet (for example, the first query response and the second query response). When the value of the A field is set to 0, it may indicate that the packet is a non-response packet (for example, the first query request or the second query request).

An R field may occupy one bit, and may be a reserved field. The R field may be set to 0 by default.

Optionally, the packet may further include a protocol number (protocol No) field shown in IFG. 10, may occupy eight bits, and may carry a protocol number.

The data field may also be described as an App Data field.

When the packet shown in FIG. 12 is the first query request or the second query request, the data field may carry one or more of the following content.

A type field may be described as a Type field, may occupy one byte, and may be used to indicate whether the data packet is a query request (the first query request and the second query request may be collectively referred to as the query request) or a query response (the first query response and the second query response may be collectively referred to as the query response). When the data packet is the first query request or the second query request, a value of the type field is query.

A length field may be described as a Len field, may occupy two bytes, and is used to indicate a length of the packet.

An identifier field of a source tracing initiating device may also be described as a BGP src Router id field, may occupy four bytes, and is used to indicate an identifier of the source tracing initiating device.

A sequence number (series number, SN) field may occupy four bytes and carry a series number, where the series number is used to identify a query event used to query a to-be-queried route.

An AFI field may occupy one byte and may be used to indicate an address family of the to-be-queried route.

An SAFI field may occupy one byte and may be used to indicate a subsequent address family of the to-be-queried route.

An RD field may occupy six bytes and may be used to indicate an RD of the to-be-queried route.

An IP address field may also be described as an IP Address field, may occupy four bytes, and may be used to indicate an IP address of the to-be-queried route.

A mask field may also be described as a Masklen field, may occupy one byte, and may be used to indicate a mask length of the to-be-queried route.

An AGE field may occupy four bytes and may be used to indicate a time at which the to-be-queried route is last updated on the source tracing initiating device.

A hop quantity field may also be described as a HOPS field, may occupy one byte, and may be used to indicate a quantity of historical routing devices traversed by the query event.

When the packet shown in FIG. 12 is the first query response or the second query response, the data field may carry one or more of the following content.

A type field may be described as a Type field, may occupy one byte, and may be used to indicate whether the data packet is a query response (the first query response and the second query response may be collectively referred to as the query response) or a query response (the first query response and the second query response may be collectively referred to as the query response). When the data packet is the first query response or the second query response, a value of the type field is query.

A length field may be described as a Len, may occupy two bytes, and is used to indicate a length of the packet.

An identifier field of a source tracing initiating device may also be described as a BGP src Router id field, may occupy four bytes, and is used to indicate an identifier of the source tracing initiating device.

An SN field may occupy four bytes and carry a series number, where the series number is used to identify a query event used to query a to-be-queried route.

An identifier field of a flapping source may be described as a Damp router id field, may occupy four bytes, and may be used to indicate an identifier of a source device that causes route flapping of the to-be-queried route, that is, may be used to indicate an identifier of the flapping source.

A return code field may be described as a Reply code field, may occupy one byte, and is used to indicate a source tracing result.

A hop quantity field may also be described as a HOPS field, may occupy one byte, and may be used to indicate a quantity of historical routing devices traversed by the query event.

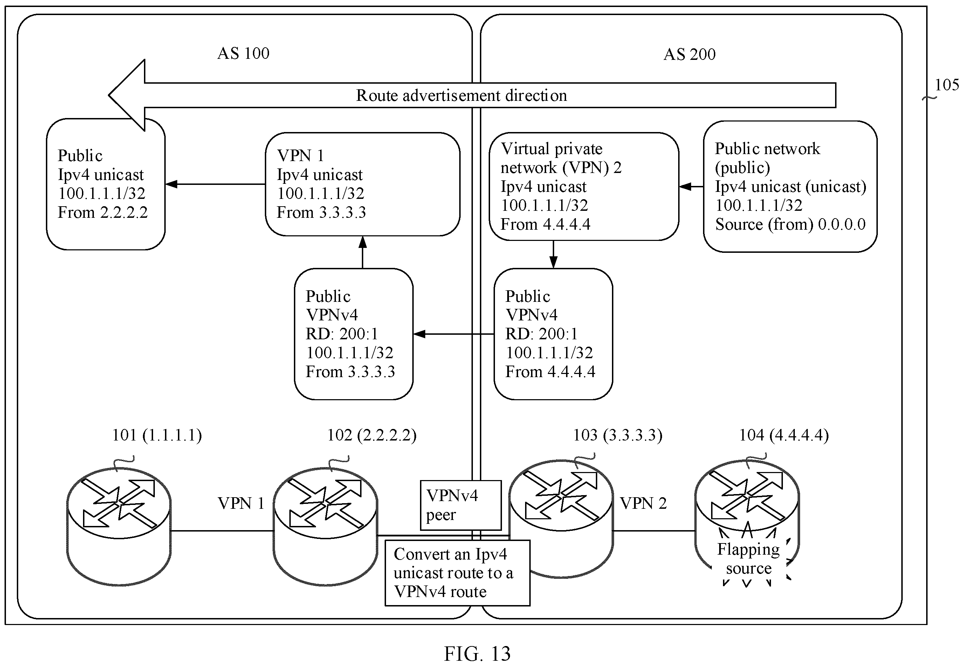

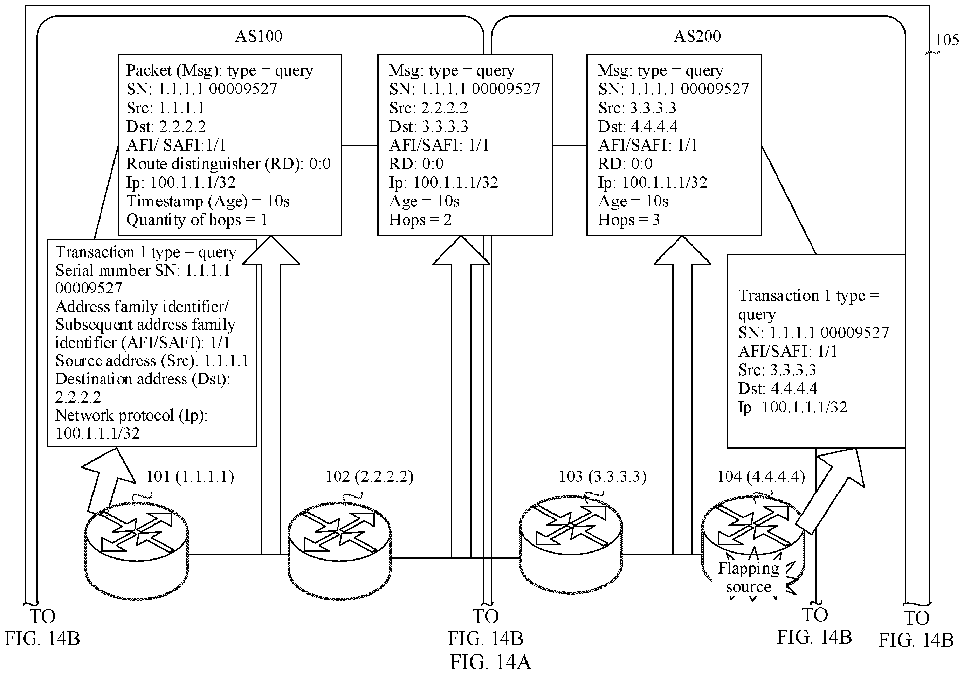

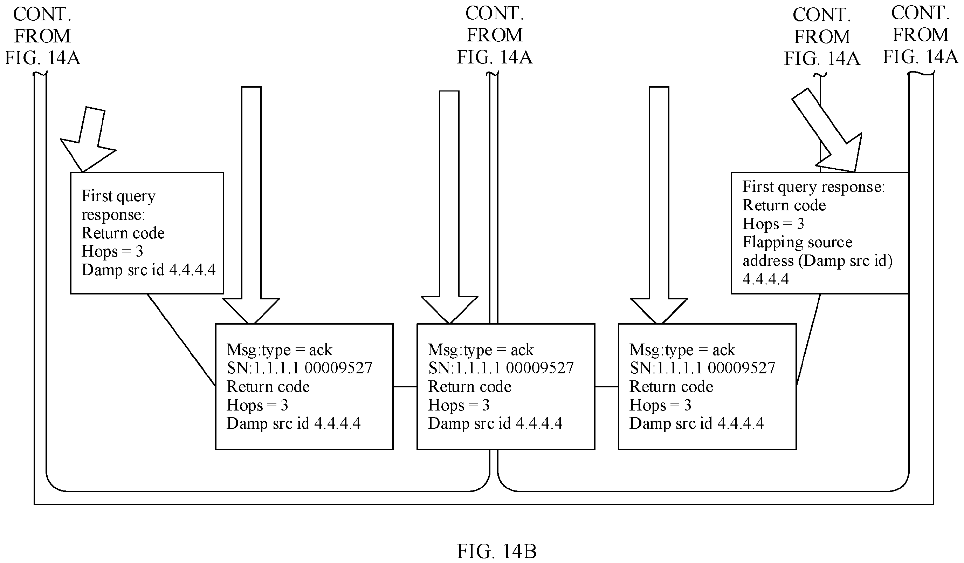

Based on the foregoing content, the following provides a specific example with reference to the schematic architectural diagram of the communications system in FIG. 1, as shown in FIG. 13 and FIG. 14A and FIG. 14B. FIG. 13 is a schematic flowchart of an example of a route advertisement method according to an embodiment of this application. As shown in FIG. 13, the route advertisement direction of the communications system 105 is: the routing device 104-the routing device 103-the routing device 102-the routing device 101. An address of the routing device 104 is 4.4.4.4, an address of the routing device 103 is 3.3.3.3, an address of the routing device 102 is 2.2.2.2, and an address of the routing device 101 is 1.1.1.1.

The following describes a route advertisement process in detail. As shown in FIG. 13, the routing device 104 determines route information corresponding to the routing device 104. As shown in the figure, the route information corresponding to the routing device 104 may include a public network (public), Ipv4 unicast (Ipv4 unicast), a route prefix 100.1.1.1/32, and a source (form) 0.0.0.0. In the figure, the form 0.0.0.0 is used to indicate that a previous-hop address of the routing device 104 in the route advertisement direction is 0.0.0.0, and this indicates that the routing device 104 is the first routing device in the route advertisement direction on the route.

Because the routing device 104 and the routing device 103 are both in the AS 200, the routing device 104 advertises the route information to the routing device 103 by using a virtual private network (Virtual Private Network, VPN) 2. As shown in the figure, the route information received by the routing device 103 by using the VPN 2 may include the VPN 2, the Ipv4 unicast (Ipv4 unicast), the route prefix 100.1.1.1/32, and the form 4.4.4.4. The form 4.4.4.4 in the figure indicates that a previous-hop address of the routing device 103 in the route advertisement direction is 4.4.4.4.

Because the routing device 103 and the routing device 102 are in two different ASs, the routing device 103 needs to convert (in some scenarios, "convert" may also be referred to as "copy") the route information received by using the VPN 2 to the public network. As shown in the figure, converted route information sent by the routing device 103 to the public network may include the public, a VPNv4, an RD: 200:1, the route prefix 100.1.1.1/32, and the form 4.4.4.4.

The routing device 103 sends converted route information to the public network to the routing device 102. As shown in the figure, the route information received by the routing device 102 by using the public network may include the public, the VPNv4, the RD: 200:1, the route prefix 100.1.1.1/32, and form 3.3.3.3. The form 4.4.4.4 in the figure indicates that a previous-hop address of the routing device 102 in the route advertisement direction is 3.3.3.3.

Because the routing device 102 and the routing device 101 are both in the AS 100, the routing device 102 needs to send converted route information received by using the public network to a VPN 1. As shown in the figure, the converted route information sent to the VPN 1 by the routing device 102 may include the VPN 1, the Ipv4 unicast (Ipv4 unicast), the route prefix 100.1.1.1/32, and the form 3.3.3.3.

Because the routing device 102 and the routing device 101 are both in the AS 100, the routing device 102 advertises the route information to the routing device 101 by using the VPN 1. As shown in the figure, the route information finally obtained by the routing device 101 may include the public, the Ipv4 unicast (Ipv4 unicast), the route prefix 100.1.1.1/32, and form 2.2.2.2. The form 2.2.2.2 in the figure indicates that a previous-hop address of the routing device 101 in the route advertisement direction is 2.2.2.2.

Based on the content shown in FIG. 13, FIG. 14A and FIG. 14B are a schematic flowchart of an example of a route flapping source query method according to an embodiment of this application. A communications system in FIG. 14A and FIG. 14B is the communications system shown in FIG. 13, and a route advertisement direction in FIG. 14A and FIG. 14B is the content shown in FIG. 13.

As shown in FIG. 14A and FIG. 14B, the routing device 101 initiates a query event, and the routing device 101 is a source tracing initiating device. Related information of the query event is shown in the figure, and may include one or more of the following content:
transaction 1 type = query, indicating that a packet type of a packet initiated by the routing device 101 for the query event is a query request;
SN: 1.1.1.1 00009527, indicating that a series number of the query event is 1.1.1.1 00009527;
AFI/SAFI: 1/1, indicating that an AFI/SAFI of the query event is 1/1;
Src: 1.1.1.1, indicating that a source address of the packet initiated by the routing device 101 for the query event is 1.1.1.1 (namely, the address of the routing device 101);
Dst: 2.2.2.2, indicating that a destination address of the packet initiated by the routing device 101 for the query event is 2.2.2.2 (namely, the address of the routing device 102); and
Ip: 100.1.1.1/32, indicating that a route prefix is 100.1.1.1/32;

If the routing device 101 determines that the routing device 101 is not the flapping source, the routing device 101 sends a query request to the routing device 102. As shown in the figure, the query request sent by the routing device 101 may include one or more of the following content:
type = query, indicating that a packet type of the packet sent by the routing device 101 is a query request; SN: 1.1.1.1 00009527;
Src: 1.1.1.1, indicating that a source address of the packet sent by the routing device 101 is 1.1.1.1 (namely, the address of the routing device 101);
Dst: 2.2.2.2, indicating that a destination address of the packet sent by the routing device 101 is 2.2.2.2 (namely, the address of the routing device 102);
AFI/SAFI: 1/1;
RD: 0:0;
Ip: 100.1.1.1/32, indicating that a route prefix is 100.1.1.1/32; and
Age = 10s, indicating a timestamp of a route on the routing device 101; and

Hops = 1, indicating that a quantity of historical routing devices traversed by the query event is 1 (the historical routing devices traversed by the query event currently include the routing device 101).

After receiving the query request sent by the routing device 101, the routing device 102 determines that the routing device 102 is not the flapping source, and sends a query request to the routing device 103. As shown in the figure, the query request sent by the routing device 102 may include one or more of the following content:
type = query, indicating that a packet type of the packet sent by the routing device 102 is a query request; SN: 1.1.1.1 00009527;
Src: 2.2.2.2, indicating that a source address of the packet sent by the routing device 102 is 2.2.2.2;
Dst: 3.3.3.3, indicating that a destination address of the packet sent by the routing device 102 is 3.3.3.3; AFI/SAFI: 1/1;
RD: 0:0;
Ip: 100.1.1.1/32, indicating that a route prefix is 100.1.1.1/32;
Age = 10s, indicating a timestamp of a route on the routing device 101; and
Hops = 2, indicating that a quantity of historical routing devices traversed by the query event is 2 (the historical routing devices traversed by the query event currently include the routing device 101 and the routing device 102).

After receiving the query request sent by the routing device 102, the routing device 103 determines that the routing device 103 is not the flapping source, and sends a query request to the routing device 104. As shown in the figure, the query request sent by the routing device 103 may include one or more of the following content:
type = query, indicating that a packet type of the packet sent by the routing device 103 is a query request; SN: 1.1.1.1 00009527;
Src: 3.3.3.3, indicating that a source address of the packet sent by the routing device 103 is 3.3.3.3;
Dst: 4.4.4.4, indicating that a destination address of the packet sent by the routing device 103 is 4.4.4.4; AFI/SAFI: 1/1;
RD: 0:0;
Ip: 100.1.1.1/32, indicating that a route prefix is 100.1.1.1/32;
Age = 10s, indicating a timestamp of a route on the routing device 101; and
Hops = 3, indicating that a quantity of historical routing devices traversed by the query event is 3 (the historical routing devices traversed by the query event currently include the routing device 101, the routing device 102, and the routing device 103).

After receiving the query request sent by the routing device 103, the routing device 104 may obtain some or all of the related information of the query event. As shown in the figure, some or all of the related information may include the following content:
transaction 1 type = query, indicating that the packet type of the packet initiated by the routing device 101 for the query event is the query request;
SN: 1.1.1.1 00009527;
AFI/SAFI: 1/1, indicating that the AFI/SAFI of the query event is 1/1;
Src: 3.3.3.3, indicating that the source address of the packet received by the routing device 104 is 3.3.3.3;
Dst: 4.4.4.4, indicating that the destination address of the packet received by the routing device 104 is 4.4.4.4; and
Ip: 100.1.1.1/32, indicating that the route prefix is 100.1.1.1/32;

If the routing device 104 determines that the routing device 104 is the flapping source, the routing device 104 may generate a first query response, and feed back the first query response to the routing device 103. As shown in the figure, related information of the first query response may include:
return code;
Hops = 3, indicating that the quantity of historical routing devices traversed by the query event is 3 (the historical routing devices traversed by the query event currently include the routing device 101, the routing device 102, and the routing device 103); and
a flapping source address (Dampsrcid): 4.4.4.4, indicating that a flapping source address corresponding to the route prefix 100.1.1.1/32 is 4.4.4.4.

As shown in the figure, the first query response generated by the routing device may include:
type = query, indicating that the packet type of the packet sent by the routing device 103 is the query request;
SN: 1.1.1.1 00009527;
the return code;
Hops = 3, indicating that the quantity of historical routing devices traversed by the query event is 3 (the historical routing devices traversed by the query event currently include the routing device 101, the routing device 102, and the routing device 103); and
the flapping source address (Dampsrcid): 4.4.4.4, indicating that the flapping source address corresponding to the route prefix 100.1.1.1/32 is 4.4.4.4.

The routing device 103 forwards the first query response to the routing device 102, and then the routing device 102 forwards the first query response to the routing device 101, so that the routing device 101 finally determines the information "Hops = 3 and the flapping source address (Dampsrcrid): 4.4.4.4" in the first query response. The routing device 101 may determine that a flapping source address of this query event is 4.4.4.4, and three routing devices need to be passed through from the routing device 101 to the routing device whose address is 4.4.4.4.

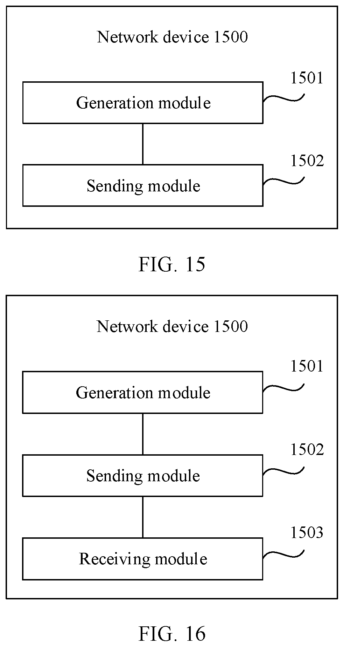

FIG. 15 is a schematic structural diagram of a network device according to an embodiment of this application. Devices such as any network device, a routing device, and a node in the embodiments of this application may be implemented by using the apparatus shown in FIG. 15. As shown in FIG. 15, the network device 1500 includes:
a generation module 1501, configured to perform step 201 in the embodiment of FIG. 2; and
a sending module 1502, configured to perform step 202 in the embodiment of FIG. 2.

Optionally, as shown in FIG. 16, the network device 1500 may further include:
a receiving module 1503, configured to receive a second packet from the peer network device, where the second packet includes a field used to indicate the first protocol, the second packet is used to indicate the network device to feed back the data of the first protocol to the peer network device, and a protocol followed by the second packet is the same as the protocol followed by the first packet.

The generation module is specifically configured to:
generate, by the network device, the first packet in response to the second packet.

Optionally, the sending module 1502 is further configured to perform step 204 in the embodiment of FIG. 2.

Optionally, the receiving module 1503 is further configured to perform step 205 in the embodiment of FIG. 2.

A determining module is configured to determine, based on a third packet, that the peer network device supports exchange of the data of the first protocol.

Optionally, the network device 1500 further includes:
an enabling module, configured to enable a capability of exchanging the data of the first protocol.

The sending module is further configured to send a fifth packet to the peer network device, where the fifth packet includes a field used to indicate the first protocol, the fifth packet further carries a field used to indicate the network device to enable the capability of exchanging the data of the first protocol, and a protocol followed by the fifth packet is the same as the protocol followed by the first packet.

Optionally, the network device further includes:
a disabling module, configured to disable the capability of exchanging the data of the first protocol.

The sending module is further configured to send a sixth packet to the peer network device, where the sixth packet includes a field used to indicate the first protocol, the sixth packet further carries a field used to indicate the network device to disable the capability of exchanging the data of the first protocol, and a protocol followed by the sixth packet is the same as the protocol followed by the first packet.

Optionally, the network device further includes:
the receiving module, configured to receive a seventh packet from the peer network device, where the seventh packet is used to indicate that the peer network device receives the first packet, and a protocol followed by the seventh packet is the same as the protocol followed by the first packet.

Optionally, the receiving module is further configured to receive an eighth packet from the peer network device, where the eighth packet is used to indicate that the peer network device receives the third packet, and a protocol followed by the eighth packet is the same as the protocol followed by the first packet.

In this embodiment of this application, the network device may transmit the data of the first protocol to the peer network device by using the first packet. Because the protocol followed by the first packet is different from the first protocol, regardless of which protocol the first protocol is specifically, the data of the first protocol may be exchanged by using the first packet. In other words, this application provides a general protocol, to transmit the data of the first protocol. This improves packet sending flexibility.

It should be noted that, when the network device provided in the foregoing embodiments sends a packet, division into the functional modules is merely used as an example for description. In actual application, the foregoing functions may be allocated to different functional modules for implementation based on a requirement. To be specific, an internal structure of the device is divided into different functional modules, to implement all or some of the foregoing functions. In addition, the network device provided in the foregoing embodiments pertains to a same concept as the embodiment of the packet sending method. For a specific implementation process of the device, refer to the method embodiment. Details are not described herein.

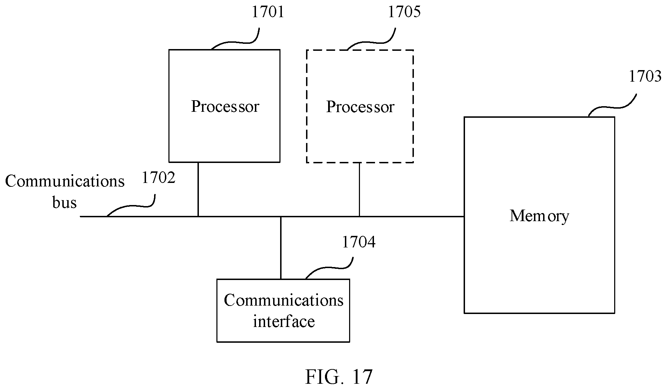

FIG. 17 is a schematic structural diagram of a network device according to an embodiment of this application. All network devices in the embodiments of this application may be implemented by using the apparatus shown in FIG. 17. Referring to FIG. 17, the apparatus includes at least one processor 1701, a communications bus 1702, a memory 1703, and at least one communications interface 1704.

The processor 1701 may be a general-purpose central processing unit (central processing unit, CPU), a microprocessor, an application-specific integrated circuit (application-specific integrated circuit, ASIC), or one or more integrated circuits configured to control program execution of solutions of this application.

The communications bus 1702 may include a channel on which information is transmitted between the foregoing components.

The memory 1703 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory 1703 may exist independently, and is connected to the processor 1701 through the communications bus 1702. The memory 1703 may alternatively be integrated with the processor 1701.

The communications interface 1704 is configured to use any apparatus such as a transceiver to communicate with another device or communications network, for example, the Ethernet, a radio access network (RAN), or a wireless local area network (wireless local area networks, WLAN).

In specific implementation, in an embodiment, the apparatus may include a plurality of processors, for example, the processor 1701 and a processor 1705 shown in FIG. 17. Each of the processors may be a single-core (single-CPU) processor, or may be a multi-core (multi-CPU) processor. The processor herein may refer to one or more devices, circuits, and/or processing cores configured to process data (for example, a computer program instruction).

The apparatus may be a general-purpose computer device or a special-purpose computer device. In specific implementation, the apparatus may be a desktop computer, a portable computer, a network server, a palmtop computer (personal digital assistant, PDA), a mobile phone, a tablet computer, a wireless terminal device, a communications device, or an embedded device. A type of the apparatus is not limited in this embodiment of this application.

The memory 1703 is configured to store program code for executing the solutions of this application, and the processor 1701 controls execution of the program code. The processor 1701 is configured to execute the program code stored in the memory 1703. The program code may include one or more software modules. The network device in this embodiment of this application may determine, by using the processor 1701 and the one or more software modules in the program code in the memory 1703, data used to develop an application.

All or some of the foregoing embodiments may be implemented by using software, hardware, firmware, or any combination thereof. When software is used to implement the embodiments, the embodiments may be all or partially implemented in a form of a computer program product. The computer program product includes one or more computer instructions. When the computer instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, or an optical disc.

The foregoing descriptions are merely embodiments of this application, but are not intended to limit this application. Any modification, equivalent replacement, or improvement made without departing from the spirit and principle of this application should fall within the protection scope of this application.

## Claims

1. A packet sending method, wherein the method comprises:
generating, by a network device, a first packet, wherein the first packet comprises a field used to indicate a first protocol, the first packet further comprises a field carrying data of the first protocol, and a protocol followed by the first packet is different from the first protocol; and
sending, by the network device, the first packet to a peer network device.

2. The method according to claim 1, wherein before the generating, by a network device, a first packet, the method further comprises:
receiving, by the network device, a second packet from the peer network device, wherein the second packet comprises a field used to indicate the first protocol, the second packet is used to indicate the network device to feed back the data of the first protocol to the peer network device, and a protocol followed by the second packet is the same as the protocol followed by the first packet; and
the generating, by a network device, a first packet comprises:
generating, by the network device, the first packet in response to the second packet.

3. The method according to claim 1 or 2, wherein before the generating, by a network device, a first packet, the method further comprises:
sending, by the network device, a third packet to the peer network device, wherein the third packet comprises a field used to indicate the first protocol, the third packet is used to indicate that the network device supports exchange of the data of the first protocol, and a protocol followed by the third packet is the same as the protocol followed by the first packet.

4. The method according to any one of claims 1 to 3, wherein before the generating, by a network device, a first packet, the method further comprises:
receiving, by the network device, a fourth packet from the peer network device, wherein the fourth packet comprises a field used to indicate the first protocol, and a protocol followed by the fourth packet is the same as the protocol followed by the first packet; and
determining, by the network device based on the fourth packet, that the peer network device supports exchange of the data of the first protocol.

5. The method according to any one of claims 1 to 4, wherein before the generating, by a network device, a first packet, the method further comprises:
enabling, by the network device, a capability of exchanging the data of the first protocol; and
sending, by the network device, a fifth packet to the peer network device, wherein the fifth packet comprises a field used to indicate the first protocol, the fifth packet further carries a field used to indicate the network device to enable the capability of exchanging the data of the first protocol, and a protocol followed by the fifth packet is the same as the protocol followed by the first packet.

6. The method according to claim 5, wherein after the sending, by the network device, a fifth packet to the peer network device, the method further comprises:
disabling, by the network device, the capability of exchanging the data of the first protocol; and
sending, by the network device, a sixth packet to the peer network device, wherein the sixth packet comprises a field used to indicate the first protocol, the sixth packet further carries a field used to indicate the network device to disable the capability of exchanging the data of the first protocol, and a protocol followed by the sixth packet is the same as the protocol followed by the first packet.

7. The method according to any one of claims 1 to 6, wherein after the sending, by the network device, the first packet to a peer network device, the method further comprises:
receiving, by the network device, a seventh packet from the peer network device, wherein the seventh packet is used to indicate that the peer network device receives the first packet, and a protocol followed by the seventh packet is the same as the protocol followed by the first packet.

8. The method according to any one of claims 3 to 7, wherein after the sending, by the network device, a third packet to the peer network device, the method further comprises:
receiving, by the network device, an eighth packet from the peer network device, wherein the eighth packet is used to indicate that the peer network device receives the third packet, and a protocol followed by the eighth packet is the same as the protocol followed by the first packet.

9. A network device, wherein the network device comprises:
a generation module, configured to generate a first packet, wherein the first packet comprises a field used to indicate a first protocol, the first packet further comprises a field carrying data of the first protocol, and a protocol followed by the first packet is different from the first protocol; and
a sending module, configured to send the first packet to a peer network device.

10. The network device according to claim 9, wherein the network device further comprises:
a receiving module, configured to receive a second packet from the peer network device, wherein the second packet comprises a field used to indicate the first protocol, the second packet is used to indicate the network device to feed back the data of the first protocol to the peer network device, and a protocol followed by the second packet is the same as the protocol followed by the first packet; and
the generation module is specifically configured to:
generate, by the network device, the first packet in response to the second packet.

11. The network device according to claim 9 or 10, wherein
the sending module is further configured to send a third packet to the peer network device, wherein the third packet comprises a field used to indicate the first protocol, the third packet is used to indicate that the network device supports exchange of the data of the first protocol, and a protocol followed by the third packet is the same as the protocol followed by the first packet.

12. The network device according to any one of claims 9 to 11, wherein the network device further comprises:
the receiving module, further configured to receive a fourth packet from the peer network device, wherein the fourth packet comprises a field used to indicate the first protocol, and a protocol followed by the fourth packet is the same as the protocol followed by the first packet; and
a determining module, configured to determine, based on the fourth packet, that the peer network device supports exchange of the data of the first protocol.

13. The network device according to any one of claims 9 to 12, wherein the network device further comprises:
an enabling module, configured to enable a capability of exchanging the data of the first protocol; and
the sending module is further configured to send a fifth packet to the peer network device, wherein the fifth packet comprises a field used to indicate the first protocol, the fifth packet further carries a field used to indicate the network device to enable the capability of exchanging the data of the first protocol, and a protocol followed by the fifth packet is the same as the protocol followed by the first packet.

14. The network device according to claim 13, wherein the network device further comprises:
a disabling module, configured to disable the capability of exchanging the data of the first protocol; and
the sending module is further configured to send a sixth packet to the peer network device, wherein the sixth packet comprises a field used to indicate the first protocol, the sixth packet further carries a field used to indicate the network device to disable the capability of exchanging the data of the first protocol, and a protocol followed by the sixth packet is the same as the protocol followed by the first packet.

15. The network device according to any one of claims 9 to 14, wherein the network device further comprises:
the receiving module, configured to receive a seventh packet from the peer network device, wherein the seventh packet is used to indicate that the peer network device receives the first packet, and a protocol followed by the seventh packet is the same as the protocol followed by the first packet.

16. The network device according to any one of claims 11 to 15, wherein
the receiving module is further configured to receive an eighth packet from the peer network device, wherein the eighth packet is used to indicate that the peer network device receives the third packet, and a protocol followed by the eighth packet is the same as the protocol followed by the first packet.

17. A network device, wherein the network device comprises a memory and a processor, wherein
the memory is configured to store a program that supports the network device in performing the method according to any one of claims 1 to 8, and store data used to implement the method according to any one of claims 1 to 8; and
the processor is configured to execute the program stored in the memory.

18. A computer-readable storage medium, wherein the computer-readable storage medium stores an instruction, and when the instruction is run on a computer, the computer is enabled to perform the method according to any one of claims 1 to 8.

19. A route flapping source query method, wherein the method is applied to a border gateway protocol BGP network, the BGP network comprises a first routing device, and the method comprises:
determining, by the first routing device, a to-be-queried route based on route information, wherein the route information is used to determine the to-be-queried route corresponding to the route information;
determining, by the first routing device, that the to-be-queried route is a route received by the first routing device from a second routing device, wherein the second routing device is a routing device that sends the to-be-queried route to the first routing device;
determining, by the first routing device, whether the first routing device is a flapping source of the to-be-queried route, wherein the flapping source of the to-be-queried route indicates a source device that causes route flapping of the to-be-queried route; and
sending, by the first routing device, a first query request to the second routing device when the first routing device determines that the first routing device is not the flapping source of the to-be-queried route, wherein the first query request is used to request the second routing device to determine the flapping source of the to-be-queried route, and the first query request comprises the route information.

20. The method according to claim 19, wherein
the determining, by the first routing device, whether the first routing device is a flapping source of the to-be-queried route comprises: determining, by the first routing device based on the to-be-queried route, whether duration between a time at which a BGP neighbor relationship between the first routing device and the second routing device last flaps and a current time is less than a first threshold; and
the sending, by the first routing device, a first query request to the second routing device when the first routing device determines that the first routing device is not the flapping source of the to-be-queried route comprises: determining, by the first routing device based on the to-be-queried route, that the duration between the time at which the BGP neighbor relationship between the first routing device and the second routing device flaps and the current time is less than the first threshold, and sending, by the first routing device, the first query request to the second routing device.

21. The method according to claim 19 or 20, wherein the determining, by the first routing device, whether the first routing device is a flapping source of the to-be-queried route comprises: determining, by the first routing device, whether duration between a time of last sending an update packet of the to-be-queried route to the second routing device and the current time is less than a second threshold; and
the sending, by the first routing device, a first query request to the second routing device when the first routing device determines that the first routing device is not the flapping source of the to-be-queried route comprises: determining, by the first routing device, that the duration between the time of last sending the update packet of the to-be-queried route to the second routing device and the current time is less than the second threshold, and sending, by the first routing device, the first query request to the second routing device.

22. The method according to any one of claims 19 to 21, wherein after the sending, by the first routing device, a first query request to the second routing device, the method further comprises:
receiving, by the first routing device, a first query response sent by the second routing device, wherein the first query response indicates the flapping source of the to-be-queried route.

23. The method according to any one of claims 19 to 22, wherein before the determining, by the first routing device, a to-be-queried route based on route information, the method further comprises:
receiving, by the first routing device, a second query request sent by a third routing device, wherein the third routing device is a routing device configured to receive the to-be-queried route from the first routing device, the second query request is used to request the first routing device to determine the flapping source of the to-be-queried route, and the second query request comprises the route information.

24. The method according to claim 23, wherein the determining, by the first routing device, a to-be-queried route based on route information comprises:
determining, by the first routing device, one or more candidate to-be-queried routes based on the route information comprised in the second query request, and determining the to-be-queried route from the one or more candidate to-be-queried routes, wherein the to-be-queried route is an optimal route in the one or more candidate to-be-queried routes; and
before the determining, by the first routing device, that the to-be-queried route is a route received by the first routing device from a second routing device, the method further comprises:
determining, by the first routing device, that duration between a timestamp of the to-be-queried route on the first routing device and the current time is less than a third threshold, wherein the timestamp of the to-be-queried route on the first routing device is used to indicate a time at which the to-be-queried route is last updated on the first routing device.

25. The method according to any one of claims 19 to 24, wherein the route information comprises a route prefix, and the route prefix is used to indicate an internet protocol IP address and a mask that are of the to-be-queried route; and
the determining, by the first routing device, a to-be-queried route based on route information comprises:
determining, by the first routing device, the to-be-queried route based on the route prefix.

26. The method according to claim 25, wherein the route information further comprises an address family identifier AFI, a subsequent address family identifier SAFI, and a route distinguisher RD, the AFI is used to indicate an address family in which the to-be-queried route is located, the SAFI is used to indicate a subsequent address family in which the to-be-queried route is located, and the RD is used to indicate a route distinguisher of the to-be-queried route; and
the determining, by the first routing device, a to-be-queried route based on route information comprises:
determining, by the first routing device, the to-be-queried route based on the AFI, the SAFI, the RD, and the route prefix.

27. The method according to claim 25 or 26, wherein the route information further comprises a sequence number and/or an identifier of a source tracing initiating device, wherein
the sequence number is used to identify a query event used to query the to-be-queried route, and the identifier of the source tracing initiating device is an identifier of a device that initiates the query event.

28. The method according to any one of claims 19 to 27, wherein before the determining, by the first routing device, a to-be-queried route based on route information, the method further comprises:
sending, by the first routing device, a first negotiation packet to the second routing device, wherein the first negotiation packet indicates the second device to enable a capability of querying a route flapping source; and
receiving, by the first routing device, a first negotiation response packet sent by the second routing device, and determining, by the first routing device based on the first negotiation response packet, that the second routing device has the capability of querying the route flapping source and the second routing device enables the capability of querying the route flapping source, wherein the first negotiation response packet is a response packet of the first negotiation packet.

29. A routing device, wherein the routing device is applied in a border gateway protocol BGP network, and the routing device comprises:
a processor, configured to: determine a to-be-queried route based on route information; determine that the to-be-queried route is a route received by the first routing device from a second routing device; determine whether the first routing device is a flapping source of the to-be-queried route; and when the first routing device determines that the first routing device is not the flapping source of the to-be-queried route, control a sending port to send a first query request to the second routing device, wherein
the sending port is configured to send the first query request to the second routing device; and
the route information is used to determine the to-be-queried route corresponding to the route information, the second routing device is a routing device that sends the to-be-queried route to the first routing device, the flapping source of the to-be-queried route indicates a source device that causes route flapping of the to-be-queried route, the first query request is used to request the second routing device to determine the flapping source of the to-be-queried route, and the first query request comprises the route information.

30. The device according to claim 29, wherein the processor is specifically configured to:
determine, based on the to-be-queried route, whether duration between a time at which a BGP neighbor relationship between the first routing device and the second routing device last flaps and a current time is less than a first threshold; and
when it is determined, based on the to-be-queried route, that the duration between the time at which the BGP neighbor relationship between the first routing device and the second routing device flaps and the current time is less than the first threshold, control the sending port to send the first query request to the second routing device.

31. The device according to claim 29 or 30, wherein the processor is specifically configured to:
determine whether duration between a time of last sending an update packet of the to-be-queried route to the second routing device and the current time is less than a second threshold; and
when it is determined that the duration between the time of last sending the update packet of the to-be-queried route to the second routing device and the current time is less than the second threshold, control the sending port to send the first query request to the second routing device.

32. The device according to any one of claims 29 to 31, further comprising a receiving port, configured to:
receive a first query response sent by the second routing device, wherein the first query response indicates the flapping source of the to-be-queried route.

33. The device according to any one of claims 29 to 32, further comprising the receiving port, configured to:
receive a second query request sent by a third routing device, wherein the third routing device is a routing device configured to receive the to-be-queried route from the first routing device, the second query request is used to request the first routing device to determine the flapping source of the to-be-queried route, and the second query request comprises the route information.

34. The device according to claim 33, wherein the processor is specifically configured to:
determine one or more candidate to-be-queried routes based on the route information comprised in the second query request, and determine the to-be-queried route from the one or more candidate to-be-queried routes, wherein the to-be-queried route is an optimal route in the one or more candidate to-be-queried routes; and
the processor is further configured to:
before it is determined that the to-be-queried route is the route received by the first routing device from the second routing device, determine that duration between a timestamp of the to-be-queried route on the first routing device and the current time is less than a third threshold, wherein the timestamp of the to-be-queried route on the first routing device is used to indicate a time at which the to-be-queried route is last updated on the first routing device.

35. The device according to any one of claims 29 to 34, wherein the route information comprises a route prefix, and the route prefix is used to indicate an internet protocol IP address and a mask that are of the to-be-queried route; and
the processor is specifically configured to:
determine, by the first routing device, the to-be-queried route based on the route prefix.

36. The device according to claim 35, wherein the route information further comprises an address family identifier AFI, a subsequent address family identifier SAFI, and a route distinguisher RD, the AFI is used to indicate an address family in which the to-be-queried route is located, the SAFI is used to indicate a subsequent address family in which the to-be-queried route is located, and the RD is used to indicate a route distinguisher of the to-be-queried route; and
the processor is specifically configured to:
determine, by the first routing device, the to-be-queried route based on the AFI, the SAFI, the RD, and the route prefix.

37. The device according to claim 35 or 36, wherein the route information further comprises a sequence number and/or an identifier of a source tracing initiating device, wherein
the sequence number is used to identify a query event used to query the to-be-queried route, and the identifier of the source tracing initiating device is an identifier of a device that initiates the query event.

38. The device according to any one of claims 29 to 37, wherein the sending port is further configured to:
send a first negotiation packet to the second routing device, wherein the first negotiation packet indicates the second device to enable a capability of querying a route flapping source; and
the receiving port is further configured to:
receive a first negotiation response packet sent by the second routing device, wherein the first routing device determines, based on the first negotiation response packet, that the second routing device has the capability of querying the route flapping source, the second routing device enables the capability of querying the route flapping source, and the first negotiation response packet is a response packet of the first negotiation packet.

39. A computer storage medium, wherein the computer storage medium stores a computer-executable instruction, and when the computer-executable instruction is invoked by a computer, the computer is enabled to perform the method according to any one of claims 19 to 29.
